# EUROPEAN PATENT APPLICATION

(11) **EP 4 365 713 A1**
(43) Date of publication of application: **08.05.2024**
(21) Application number: 22855992.8
(22) Date of filing: 14.06.2022
(51) Int. Cl.: G06F 1/3234, G06F 1/3228, G06F 1/3218, G06F 1/16, G04G 9/00

(54) **ELECTRONIC DEVICE FOR DISPLAYING IMAGE AND OPERATION METHOD THEREOF**

(30) Priority: 09.08.2021 KR 20210104859; 20.10.2021 KR 20210140057
(71) Applicant: Samsung Electronics Co., Ltd., Suwon-si, Gyeonggi-do 16677 (KR)
(72) Inventor: CHOI, Yongjun, Suwon-si Gyeonggi-do 16677 (KR); HYOUNG, Joungok, Suwon-si Gyeonggi-do 16677 (KR); KIM, Minwoo, Suwon-si Gyeonggi-do 16677 (KR); KIM, Jihoon, Suwon-si Gyeonggi-do 16677 (KR)
(74) Representative: HGF
(86) International application number: PCT/KR2022/008350
(87) International publication number: WO 2023/017990

(57) **Abstract**

According to the disclosure of the present document, an electronic device may comprise: a display; at least one sensor module; a time module which receives time information; a first processor which generates and outputs a first image in a first mode; a second processor which generates and outputs a second image in a second mode driven at lower power than the first mode; and a sensor hub which transmits sensor data, acquired through the sensor module, to at least one of the first processor and the second processor in the second mode, wherein the second processor is configured to, in the second mode where the first processor is in a sleep state, receive a third image associated with the second image through the first processor, combine the third image with at least one of the sensor data received from the sensor module and the time information received through the time module to generate the second image, and display the second image on the display.

## Description

### [Technical Field]

Embodiments disclosed in the disclosure relate to an electronic device for displaying an image and an operation method thereof.

### [Background Art]

Recently, with the development of mobile communication technologies, an electronic device changes to be freely connected with a wireless/wired network while being easily portable. Functions capable of being performed by the electronic device have varied. For example, portable electronic devices such as smartphones and tablet PCs may support various functions, such as Internet access and multimedia content playback, other than a call function and a message transmitting/receiving function.

As such, the electronic device implemented in various forms may visually provide a user with various pieces of content (e.g., an image, a video, or the like) by means of its display.

### [Disclosure]

### [Technical Problem]

An electronic device may continuously collect details about a surrounding environment or a personal body change in real time. Furthermore, the electronic device may display the collected information or time information on its screen. In this case, the electronic device may consume a lot of current.

Various embodiments of the disclosure may provide an electronic device capable of including a plurality of processors to reduce current consumption and an operation method thereof.

### [Technical Solution]

In accordance with an aspect of the disclosure, an electronic device is provided. The electronic device may include a display, at least one sensor module, a time module that receives time information, a first processor that generates and outputs a first image in a first mode, a second processor that generates and outputs a second image in a second mode running at lower power than the first mode, and a sensor hub that transmits sensor data obtained by means of the sensor module in the second mode to at least any one of the first processor and the second processor. The second processor may be configured to receive a third image associated with the second image through the first processor, in the second mode in which the first processor is in a sleep state, and blend at least any one of the sensor data received from the sensor module and the time information received through the time module with the third image to generate the second image and display the second image on the display.

In accordance with another aspect of the disclosure, an operation method of an electronic device is provided. The operation method may include generating and outputting, by a first processor, a first image in a first mode, generating and outputting, by a second processor, a second image, in a second mode running at lower power than the first mode, receiving, by a time module, time information, sensing, by at least one sensor module, activity information of a user who uses the electronic device, in the first mode and the second mode, and transmitting, by a sensor hub, the activity information of the user, the activity information being sensed in the first mode, to the first processor and transmitting, by the sensor hub, the activity information of the user, the activity information being sensed in the second mode, to the second processor. The second processor may be configured to receive a third image associated with the second image through the first processor, in the second mode in which the first processor is in a sleep state and blend at least any one of sensor data received from the sensor module and the time information received through the time module with the third image to generate the second image and display the second image on a display.

### [Advantageous Effects]

According to various embodiments disclosed in the disclosure, the electronic device may include a plurality of processors and reduce the number of times that a relatively high power processor is driven to reduce current consumption.

According to various embodiments disclosed in the disclosure, the electronic device may implement an always on display capable of outputting watch and/or sensor data using a relatively low power processor upon a low power display mode.

In addition, various effects ascertained directly or indirectly through the disclosure may be provided.

### [Description of Drawings]

FIG. 1 is a block diagram illustrating an electronic device in a network environment, according to various embodiments;
FIG. 2 is a block diagram of a display module, according to various embodiments;
FIG. 3A is a front perspective view of an electronic device according to an embodiment; FIG. 3B is a back perspective view of an electronic device according to an embodiment;
FIG. 4 is an exploded perspective view of an electronic device according to an embodiment;
FIG. 5 is a drawing illustrating an example of a system architecture for implementing a low power display mode and a wake-up mode of an electronic device according to various embodiments;
FIGS. 6A and 6B are drawings illustrating various embodiments of an electronic device implemented in a low power display mode and a wake-up mode;
FIG. 7 is a flowchart for describing a process of starting and stopping a low power display mode according to various embodiments;
FIG. 8A is a drawing for describing a real-time update operation upon a low power display mode in an electronic device according to various embodiments; FIG. 8B is a drawing for describing an operation of updating sensor data upon a low power display mode in an electronic device according to various embodiments;
FIGS. 9A to 9E are drawings for describing a layer used to implement at least one piece of watch-related information and exercise-related information of an electronic device according to various embodiments;
FIG. 10A is a drawing illustrating a background image included in a first layer of an electronic device and a visual object included in a second layer according to an embodiment; FIGS. 10B and 10C are drawings illustrating a screen on which an analog watch image is implemented in an electronic device according to an embodiment;
FIGS. 11A to 11C are drawings illustrating a screen on which a digital watch image is implemented in an electronic device according to an embodiment; and
FIG. 12 illustrates flow of processing a watch image and an exercise information image in an active mode and a low power display mode, according to an embodiment of the disclosure.

With regard to description of drawings, the same or similar denotations may be used for the same or similar components.

### [Mode for Invention]

Hereinafter, certain embodiments of the disclosure will be described with reference to the accompanying drawings. Accordingly, those of ordinary skill in the art will recognize that modification, equivalent, and/or alternative on the certain embodiments described herein can be variously made without departing from the disclosure.

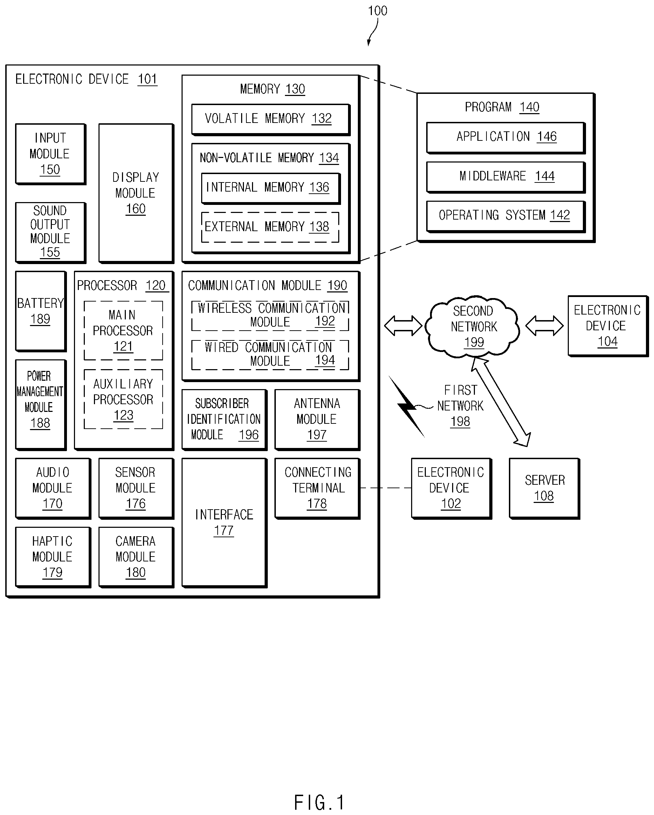

FIG. 1 is a block diagram illustrating an electronic device 101 in a network environment 100 according to certain embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element implemented using a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example. The electronic device 101 may provide ultra-low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

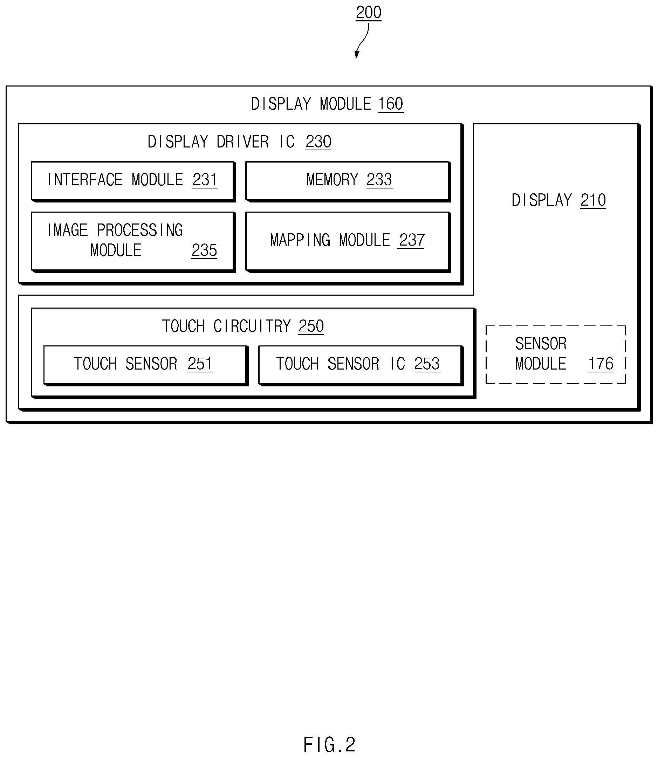

FIG. 2 is a block diagram 200 of the display module 160, according to various embodiments.

Referring to FIG. 2, the display module 160 may include a display 210 and a display deriver IC (DDI) 230 to control the display 210. The DDI 230 may include an interface module 231, a memory 233 (e.g., a buffer memory), an image processing module 235, or a mapping module 237. The DDI 230 may receive image information including, for example, image data or an image control signal corresponding to a command for controlling image data, from another component of the electronic device 101 through the interface module 231. For example, according to an embodiment, the image information may be received from the processor 120 (e.g., the main processor 121 (e.g., an application processor) or the auxiliary processor 123 (e.g., the graphic processing device) operated independently from the function of the main processor 121). The DDI 230 may make communication with a touch circuit 250 or the sensor module 176 through the interface module 231. The DDI 230 may store at least some of the received image information in the memory 233, for example, in unit of a frame. The image processing module 235 may perform pretreatment or post-treatment (e.g., adjusting a resolution, a brightness, or a size), with respect to, for example, at least some of the image data based at least on the characteristic of the image data or the characteristic of the display 210. The mapping module 237 may generate a voltage value or a current value corresponding to the image data subject to the pretreatment or the post-treatment through the image processing module 235. According to an embodiment, the voltage value and the current value may be generated based at least partially on attributes (e.g., the array (RGB stripe or pentile structure) of pixels or the size of each sub-pixel) of the display 210. At least some pixels of the display 210 may be driven based at least partially on, for example, the voltage value or the current value, such that visual information (e.g., a text, an image, or an icon) corresponding to the image data is displayed through the display 210.

According to an embodiment, the display module 160 may further include the touch circuit 250. The touch circuit 250 may include a touch sensor 251 and a touch sensor IC 253 for controlling the touch sensor 251. For example, the touch sensor IC 253 may control the touch sensor 251 to sense the touch input or the hovering input to a specified position of the display 210. For example, the touch sensor IC 253 may sense a touch input or a hovering input by measuring the change in the signal (e.g., a voltage, a light quantity, a resistance, or a charge amount) at a specific position of the display 210. The touch sensor IC 253 may provide, to the processor 120, information (e.g., a position, an area, pressure, or a time) on the sensed touch input or hovering input. According to an embodiment, at least a portion (e.g., the touch sensor IC 253) of the touch circuit 250 may be included in a portion of the display driver IC 230 or the display 210, or a portion of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In this case, the at least one sensor or the control circuit for the at least one sensor may be embedded in a portion (e.g., the display 210 or the DDI 230) of the display module 160 or a portion of the touch circuit 250. For example, when the sensor module 176 embedded in the display module 160 includes a biometric sensor (e.g., a fingerprint sensor), the biometric sensor may obtain biometric information (e.g., a fingerprint image) associated with a touch input through a partial area of the display 210. For another example, when the sensor module 176 embedded in the display module 160 includes a pressure sensor, the pressure sensor may obtain input information associated with the touch input through a partial area or the whole area of the display 210. According to an embodiment, the touch sensor 251 or the sensor module 176 may be disposed between pixels provided in a pixel layer or disposed on or under the pixel.

The electronic device according to certain embodiments disclosed in the disclosure may include an electronic device, such as a bar type, a foldable type, a rollable type, a sliding type, a wearable type, a tablet PC, and/or a notebook PC. The electronic device according to certain embodiments disclosed in the disclosure is not limited to the above-described example, and may include other various electronic devices.

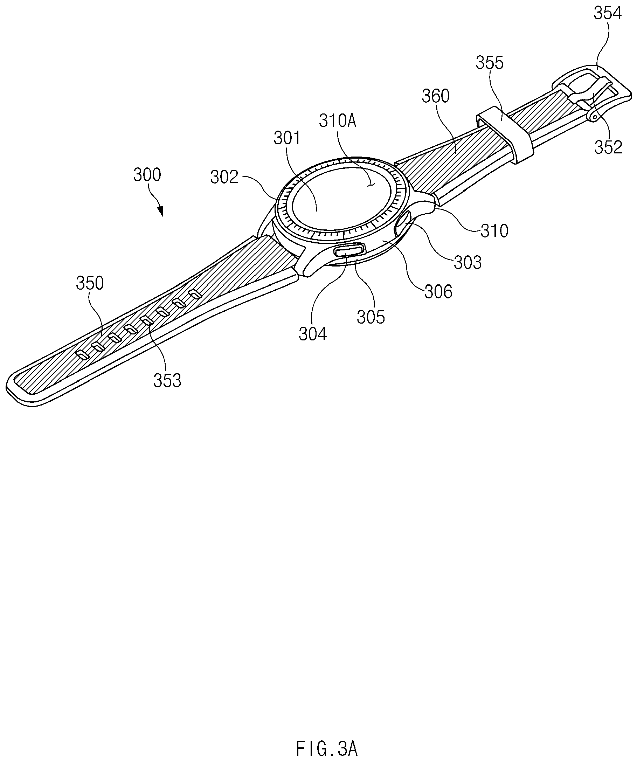

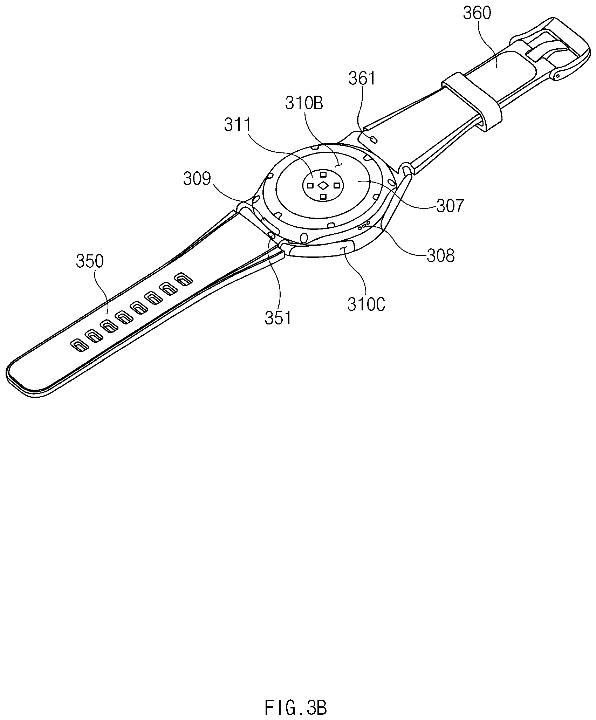

FIG. 3A is a front perspective view of an electronic device according to an embodiment. FIG. 3B is a back perspective view of an electronic device according to an embodiment.

Referring to FIGS. 3A and 3B, an electronic device 300 (e.g., an electronic device 101 of FIG. 1) according to an embodiment may include a housing 310 including a first surface (or a front surface) 310A, a second surface (or a back surface) 310B, and a side surface 310C surrounding a space between the first surface 310A and the second surface 310B, and binding members 350 and 360 connected with at least a part of the housing 310 and configured to bind the electronic device 300 to a part of a body (e.g., a wrist, an ankle, or the like) of a user to be removable. In another embodiment (not illustrated), the housing 310 may be referred to as a structure which forms some of the first surface 310A, the second surface 310B, and the side surface 310C. According to an embodiment, the first surface 310A may be formed by a front plate 301 (e.g., a glass plate including various coating layers, or a polymer plate), at least a portion of which is substantially transparent. The second surface 310B may be formed by a back plate 307 which is substantially opaque. For example, the back plate 307 may be formed of a coated or colored glass, a ceramic, a polymer, a metal (e.g., aluminum, stainless steel (STS), or magnesium), or a combination of at least two of the materials. The side surface 310C may be coupled to the front plate 301 and the back plate 307 and may be formed by a side bezel structure (or a "side member") 306 including a metal and/or a polymer. According to an embodiment, the front plate 301 may be a circle, and the side bezel structure 306 may be a round annular shape surrounding an edge of the front plate 301. According to another embodiment, the side bezel structure 306 may be implemented in various different shapes, such as a rectangle, along the front plate 301. In embodiment, the back plate 307 and the side bezel structure 306 may be integrally formed with each other and may include the same material (e.g., a metal material such as aluminum). The binding members 350 and 360 may be formed of various materials and in various shapes. The binding members 350 and 360 may be formed such that an integral type and a plurality of unit links are capable of moving with respect to each other by woven fabric, leather, rubber, urethane, metal, ceramic, or a combination of at least two of the materials.

According to an embodiment, the electronic device 300 may include at least one or more of a display 320 (refer to FIG. 2), an audio module 305, 308, a sensor module 311, a key input device 200, and a connector hole 309. In any embodiment, the electronic device 300 may not include at least one (e.g., the key input device 200, the connector hole 309, or the sensor module 311) of the components or may further include another component.

The display 320 may be exposed, for example, through a considerable portion of the front plate 301. A shape of the display 320 may be a shape corresponding to the shape of the front plate 301, and the display 320 may be various shapes such as a circle, an oval, or a polygon. The display 320 may be coupled to a touch sensing circuit, a pressure sensor capable of measuring the intensity (or pressure) of a touch, and/or a fingerprint sensor or may be disposed adjacent thereto.

According to an embodiment, the audio module 305, 308 may include a microphone hole 305 and a speaker hole 308. A microphone for obtaining external sound may be disposed in the microphone hole 305. In any embodiment, a plurality of microphones may be arranged in the microphone hole 305 to detect a direction of sound. The speaker hole 308 may be used as an external speaker and a call receiver. In a certain embodiment, the speaker hole 308 and the microphone hole 305 may be implemented as one hole, or a speaker (e.g., a piezoelectric speaker) may be included without the speaker hole 308.

According to an embodiment, the sensor module 311 may generate an electrical signal or a data value, which corresponds to an internal operation state of the electronic device 300 or corresponds to an external environment state. The sensor module 311 may include, for example, a biometric sensor module 311 (e.g., an HRM sensor) disposed on the second surface 310B of the housing 310. The electronic device 300 may further include a sensor module not illustrated, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illuminance sensor, an angle sensor, and a geomagnetic sensor.

According to an embodiment, the key input device 200 may include a rotatable bezel 302 disposed on the first surface 310A of the housing 310 and capable of rotating in at least one direction, and/or a side key button (303, 304) disposed on the side surface 310C of the housing 310. The rotatable bezel 302 may be of a shape corresponding to the shape of the front plate 301. When viewed from above the front plate 301, the rotatable bezel 302 may be a round annular member around the front plate 301, which may be rotatably connected with the side member 306. In another embodiment, the electronic device 300 may not include some or all of the key input devices 200 described above, and the key input device(s) 200 not included therein may be implemented on the display 320 in another form such as a soft key. The connector hole 309 may include another connector hole (not illustrated) capable of accommodating a connector (e.g., a USB connector) for transmitting and receiving power and/or data with an external electronic device and accommodating a connector for transmitting and receiving an audio signal with the external electronic device. For example, the electronic device 300 may further include, for example, a connector cover (not illustrated) which covers at least a portion of the connector hole 309 and blocks the introduction of external foreign substances to the connector hole 309.

According to an embodiment, the binding members 350 and 360 may be bound to be removable from at least a partial area of the housing 310 using locking members 351 and 361. The binding members 350 and 360 may include at least one or more of a fixing member 352, a fixing member fastening hole 353, a band guide member 354, and a band fixing ring 355.

According to an embodiment, the fixing member 352 may be configured to fix the housing 310 and the binding members 350 and 360 to a part (e.g., a wrist, an ankle, or the like) of the body of the user. The fixing member fastening hole 353 may fix the housing 310 and the binding members 350 and 360 to the part of the body of the user in response to the fixing member 352. The band guide member 354 may be configured to limit a movement range of the fixing member 352 when the fixing member 352 is fastened with the fixing member fastening hole 353, and thus, the binding members 350 and 360 may be bound to the part of the user's body to be in close contact therewith. The band fixing ring 355 may limit the movement range of the binding member 350, 360, with the fixing member 352 fastened to the fixing member fastening hole 353.

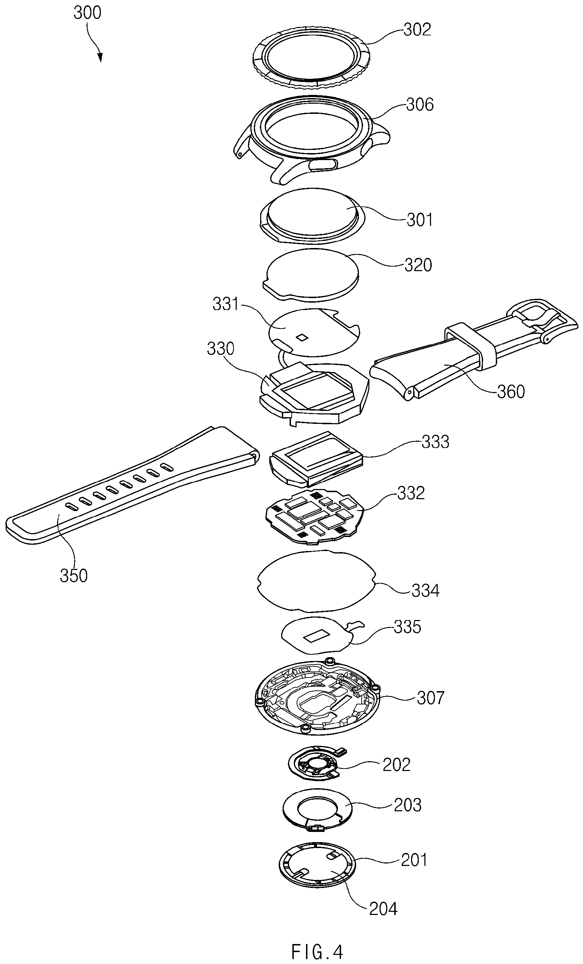

FIG. 4 is an exploded perspective view of an electronic device according to an embodiment.

Referring to FIG. 4, an electronic device 300 may include a side bezel structure 306, a rotatable bezel 302, a front plate 301, a display 320, a first antenna 331, a second antenna 335, a support member 330 (e.g., a bracket), a battery 333, a printed circuit board 332, a sealing member 334, a back plate 307, and/or binding members 350 and 360.

According to an embodiment, the rotatable bezel 302 may be rotatably coupled to a side member 306 of a housing (e.g., a housing 310 of FIG. 3A). The rotatable bezel 302 may rotate along a circumference of the display 320.

According to an embodiment, the support member 330 may be disposed in the electronic device 300 to be connected with the side bezel structure 306 or may be integrally formed with the side bezel structure 306. The support member 330 may be formed of a metal material and/or a non-metal (e.g., polymer) material. The display 320 may be coupled to one surface of the support member 330, and the printed circuit board 332 may be coupled to the other surface of the support member 330. A processor, a memory, and/or an interface may be mounted on the printed circuit board 332. The processor may include, for example, one or more of a central processing unit, an application processor, a graphic processing unit (GPU), an application processor, a sensor processor, or a communication processor.

The memory may include, for example, a volatile memory or a nonvolatile memory. The interface may include, for example, a high definition multimedia interface (HDMI), a universal serial bus (USB) interface, an SD card interface, and/or an audio interface. The interface may electrically or physically connect, for example, the electronic device 300 with an external electronic device and may include a USB connector, an SD card/MMC connector, or an audio connector.

The battery 333 may be a device for supplying power to at least one component of the electronic device 300, which may include, for example, a primary cell incapable of being recharged, a secondary cell rechargeable, or a fuel cell. At least a portion of the battery 333 may be disposed on substantially the same plane as, for example, the printed circuit board 332. The battery 333 may be integrally disposed in the electronic device 300 or may be disposed to be removable from the electronic device 300.

According to an embodiment, the first antenna 331 may be disposed between the display 320 and the support member 330. The first antenna 331 may include, for example, a near field communication (NFC) antenna, a wireless charging antenna, and/or a magnetic secure transmission (MST) antenna. For example, the first antenna 331 may perform short-range communication with an external device, or may wirelessly transmit and receive power necessary for charging and may transmit a short-range communication signal or a magnetic-based signal including payment data. In another embodiment, an antenna structure may be formed by a part of the side bezel structure 306 and/or the support member 330 or by a combination thereof.

According to an embodiment, the second antenna 335 may be disposed between the circuit board 332 and the back plate 307. The second antenna 335 may include, for example, a near field communication (NFC) antenna, a wireless charging antenna, and/or a magnetic secure transmission (MST) antenna. For example, the second antenna 335 may perform short-range communication with the external device, or may wirelessly transmit and receive power necessary for charging and may transmit a short-range communication signal or a magnetic-based signal including payment data. In another embodiment, an antenna structure may be formed by a part of the side bezel structure 306 and/or the back plate 307 or by a combination thereof.

According to an embodiment, the sealing member 334 may be located between the side bezel structure 306 and the back plate 307. The sealing member 334 may be configured to block humidity and foreign substances introduced into a space surrounded by the side bezel structure 306 and the back plate 307.

According to an embodiment, the back plate 307 and the back cover window 201 may form an inner space to be coupled to each other. Various electronic parts may be located in the inner space. For example, at least any one of the biometric sensor 202, the close contact sensor 204, and the wireless charging coil 203 may be located between the back plate 307 and the back cover window 201.

According to an embodiment, the biometric sensor 202 and the wireless charging coil 203 may be located between the back plate 307 and the back cover window 201. In another embodiment, the biometric sensor 202 and the wireless charging coil 203 may be located between the sealing member 334 and the back plate 307.

According to an embodiment, the close contact sensor 204 may be located between the back plate 307 and the back cover window 201. In an embodiment, the close contact sensor 204 may be located in a portion except for a portion corresponding to the area of the biometric sensor 202.

According to various embodiments, the electronic device 300 may operate in an active mode (or a first mode) and a low power display (LPD) mode (or an inactive mode or a second mode). For example, when the electronic device 300 operates in the active mode, as sufficient power is supplied to a hardware module and/or a software module included in the electronic device 300, the electronic device 300 may provide various pieces of content (e.g., a graphic element) required by a user. When the electronic device 300 operates in the low power display mode, a part of the hardware module and/or the software module included in the electronic device 300 may become inactive. The electronic device 300 which operates in the low power display mode may receive as little power as possible and may perform only a specified (or limited) function.

According to various embodiments, the electronic device 300 may have an always on display (AOD) function for always displaying pieces of required information even in the low power display mode. According to an embodiment, the shape of the screen displayed by means of the AOD function may vary. Content of at least any one of time information in an analog or digital form, exercise information, biometric information, and additional information may be displayed according to the selection of the user on the screen displayed by means of the AOD function. For example, the time information may include current time information. The exercise information may include, for example, an average speed, steps, an average pace, or an exercise duration. The biometric information may include, for example, a body temperature, blood pressure, or a heart rate. The additional information may include, for example, a calendar, weather, a remaining battery capacity, a missed call, an unconfirmed message, or an icon.

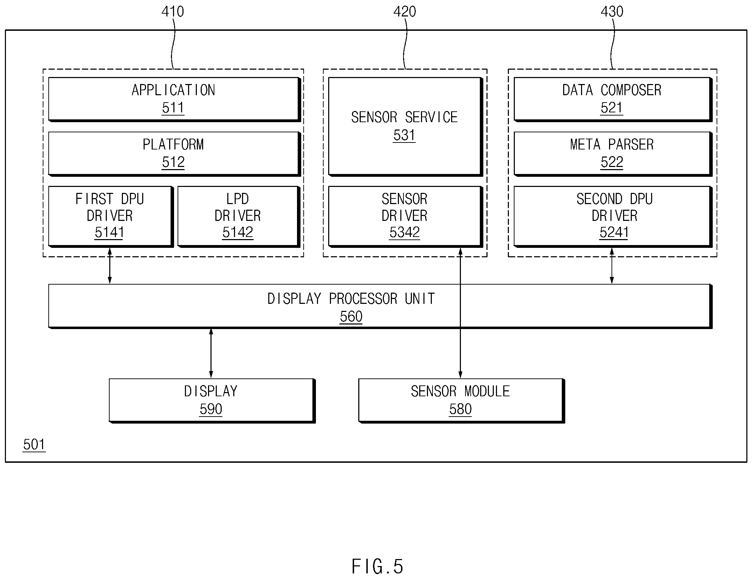

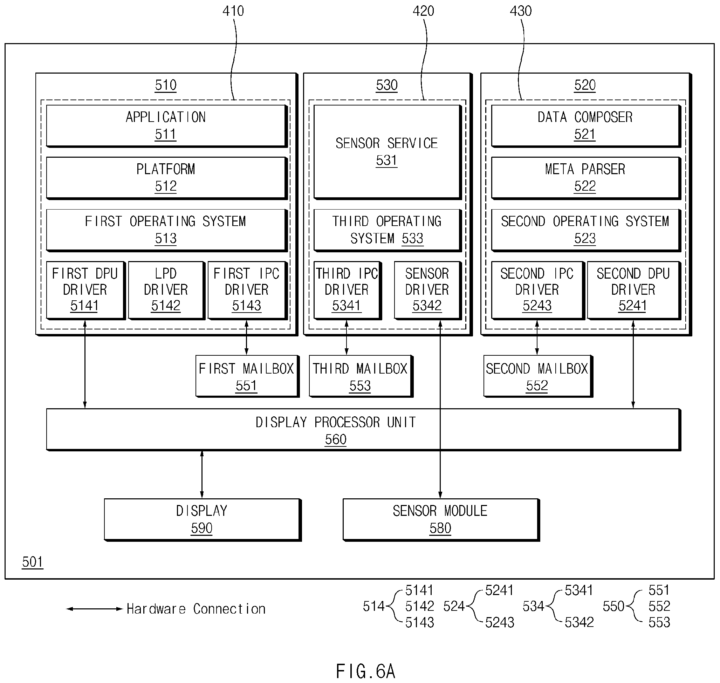

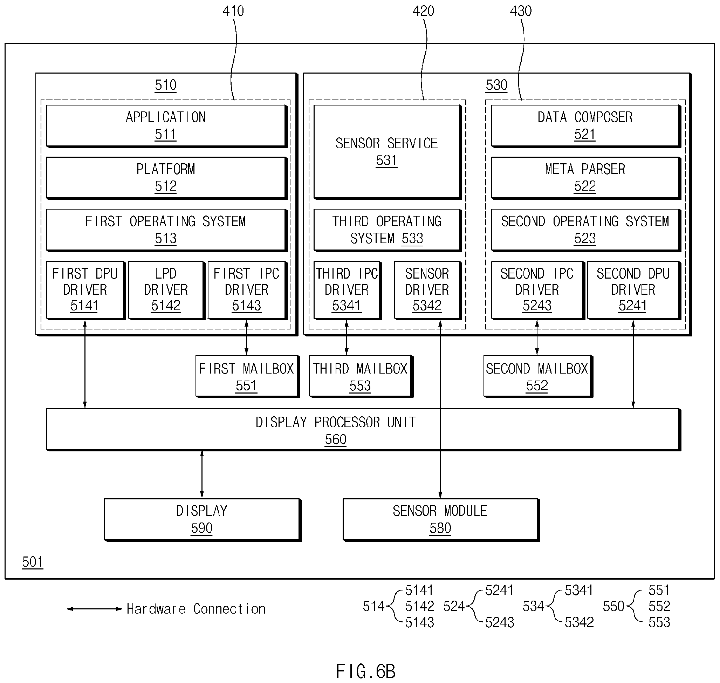

FIG. 5 is a drawing illustrating an example of a system architecture for implementing a low power display mode and a wake-up mode of an electronic device according to various embodiments. FIGS. 6A and 6B are drawings illustrating various embodiments of an electronic device implemented in a low power display mode and an active mode of the disclosure. A software module illustrated in FIG. 5 is at least some embodiments, and at least some of components illustrated according to a platform included in an electronic device (e.g., an electronic device 501 of FIG. 5) may be changed.

Referring to FIGS. 5 to 6B, the electronic device 501 according to various embodiments may include a plurality of software modules 410, 420, and 430, a display 590, or a sensor module 580. Although some of the illustrated components are omitted or replaced, there may be no problem in implementing various embodiments of the disclosure. Furthermore, the electronic device 501 may include at least some of components and/or functions of an electronic device 101 of FIG. 1 and/or an electronic device 300 of FIGS. 3A to 4.

According to an embodiment, the display 590 may display an image and may be implemented as, but not limited to, any one of a liquid crystal display (LCD), a light-emitting diode (LED) display, an organic light-emitting diode (OLED) display, a micro electro mechanical systems (MEMS) display, or an electronic paper display. The display 590 may include at least some of components and/or functions of a display module 160 of FIG. 1 and/or a display module 160 of FIG. 2. The display 590 may include a touch screen panel (not illustrated). The touch screen panel may detect a touch input or a hovering input to a window (not illustrated) provided on the front of the display 590.

According to an embodiment, a memory (e.g., a memory 130 of FIG. 1) may include a volatile memory and a nonvolatile memory, which is not limited in a detailed implementation example. The memory may store the plurality of software modules 410, 420, and 430. Furthermore, the memory may store various instructions capable of being performed by at least any one of the plurality of software modules 410, 420, and 430. Such instructions may include a control command, such as arithmetic and logical operation, data movement, or input and output, which is capable of being recognized by a memory controller (not illustrated), and may be defined on a framework stored in the memory.

According to an embodiment, the sensor module 580 may obtain data for a state of the electronic device 501 and a state of a user wearing the electronic device 501 on his or her wrist. For example, the sensor module 580 may include a biometric sensor (e.g., a photoplethysmogram (PPG) sensor) for obtaining data for a heart rate of the user wearing the electronic device 501 on the wrist or data for blood pressure. For another example, the sensor module 580 may include a motion sensor (e.g., a geomagnetic sensor, a gyro sensor, an acceleration sensor, a proximity sensor, or the like) for obtaining data for a posture of the electronic device 501 or obtaining a change in movement speed of the electronic device 501. For another example, the sensor module 580 may include a positioning sensor (e.g., a global positioning system (GPS) receiver, a cellular communication circuit, a Wi-Fi communication circuit, a Bluetooth communication circuit, or the like) for obtaining data for a position of the electronic device 501. However, it is not limited thereto.

According to an embodiment, the plurality of software modules 410, 420, and 430 may include a first software module 410, a second software module 430, and/or a third software module 420. The first software module 410 may include at least any one of at least one application 511, a platform 512, a first display processor unit (DPU) driver 5141, and an LPD driver 5142. The second software module 430 may include at least any one of a data composer 521, a meta parser 522, and a second DPU driver 5241. The third software module 420 may include a sensor service 531 and a sensor driver 5342. Each of the first software module 410, the second software module 430, and the third software module 420 may not include at least one of the components or may additionally include another component.

According to an embodiment, the plurality of software modules 410, 420, and 430 may be executed by a plurality of processors as illustrated in FIG. 6A or 6B.

As an example, as illustrated in FIG. 6A, the electronic device 501 may include a plurality of processors 510, 520, and 530 which may separately execute the plurality of software modules 410, 420, and 430, respectively. The first processor 510 may execute the first software module 410, the second processor 520 may execute the second software module 430, and the third processor 530 may execute the third software module 420. The third processor 530 may be a sensor hub.

For another example, as illustrated in FIG. 6B, the electronic device 501 may execute at least two of the plurality of software modules by means of one processor. The second processor 520 illustrated in FIG. 6A may be formed with the third processor 530 as one package or the second processor 520 illustrated in FIG. 6A may be omitted, and the third software module 420 may be executed together with the second software module 430 executed by the second processor 520 in the third processor 530. The third processor 530 may control operations of a sensor module 580 and a display processor unit 560, under at least one operating system. In FIG. 6B, the third processor 530 may control an operation of a display 590 under a second operating system 523 and may control an operation of the sensor module 580 under a third operating system 533. In addition, the third operating system 533 formed with the second operating system 523 as one package may control operations of the sensor module 580 and the display processor unit 560.

According to an embodiment, at least any one of the first processor 510, the second processor 520, and the third processor 530 may execute calculation and data processing about control and/or communication of at least one other component of the electronic device 501. At least any one of the first processor 510, the second processor 520, and the third processor 530 may include various software modules and hardware modules. Upon a low power display mode, at least some of the various software modules and hardware modules may be deactivated or may receive less power to perform only a specified limited function. For example, as illustrated in FIG. 5, upon the low power display mode, at least any one of the memory (not illustrated), the sensor module 580, and the memory controller (not illustrated) may be deactivated.

According to an embodiment, the hardware module may include a mailbox 550, the sensor module 580, the memory controller (not illustrated), and/or the display processor unit (DPU) 560. The memory controller may control to read data stored in the memory and write data in the memory. The mailbox 550 may be an interface used for communication between the first processor 510, the second processor 520, and the third processor 530. Furthermore, the mailbox 550 may support synchronization of data transmission between at least any one of the first processor 510, the second processor 520, and the third processor 530 and an external electronic device. The display processor unit 560 may control driving of the display 590 such that a component of a category according to the operation of the executed application 511 is displayed.

According to an embodiment, at least any one of the first processor 510, the second processor 520, and the third processor 530 (or the sensor hub) may operate in various states.

For example, when the electronic device 501 is in an active mode, the first processor 510 may operate in a wake-up state and the second processor 520 may operate in the wake-up state or a sleep state. In the active mode, the first processor 510 may perform various functions of the electronic device 501 based on sufficiently supplied power. In the active mode, the second processor 520 may maintain the sleep state by blocking power supplied to at least any one of a plurality of function blocks included in the second processor 520.

For another example, when the electronic device 501 is in a low power display mode, the first processor 510 may maintain the sleep state by blocking power supplied to at least any one of a plurality of function blocks included in the first processor 510. In the low power display mode, the second processor 520 may perform only a limited function of the electronic device 501 based on as little power as possible. When the first processor 510 is in the sleep state, the second processor 520 may process sensor information obtained by means of the at least one sensor module 580 and/or an input obtained from the user, without waking up the first processor 510. The second processor 520 may independently control the sensor module 580 and/or the display 590. In the low power display mode, the second processor 520 may alternately operate in the wake-up state and the sleep state. The second processor 520 may periodically switch to the wake-up state and may update image information displayed on the display. For example, when displaying information of a watch image in the low power display mode, the second processor 520 may periodically switch to the wake-up state to update an image of at least one of hour information, minute information, and second information over time.

According to an embodiment, the first processor 510 may control the overall driving of the electronic device 501 upon the active mode. According to an embodiment, the first processor 510 may execute the first software module 410 including at least any one of at least one application 511, a platform 512, a first operating system 513, and a first driver 514.

According to an embodiment, the application 511 may include at least one application program which is stored in the memory and is executable by the first processor 510. The application 511 may include, for example, at least any one program among a system application, a low power display application (e.g., a watch face), and a health application. According to an embodiment, the application 511 may form a low power display screen set by the user and may deliver the formed low power display screen to the platform 512 through a platform application programming interface (API).

According to an embodiment, the platform 512 may be software which provides various services for running the application 511. The platform 512 may receive data for low power display (e.g., meta data and image data) from the application 511 and may process the data for low power display to be suitable for the hardware module and may deliver it to the first driver 514. The meta data may be, for example, information data required when image data is implemented. For example, the meta data may include data, such as resolution, an angle, a format, a font, rotation, and/or a shape, as well as coordinate information and size information and may be represented as a parameter.

According to an embodiment, the first operating system 513 may control a resource associated with the electronic device 501. For example, the first operating system 513 may include Android, iOS, Windows, Symbian, Tizen, or Bada.

According to an embodiment, the first driver 514 may be responsible for an interface between at least any one of the mailbox 550 and the display processor unit 560 and the first processor 510. According to an embodiment, the first driver 514 may be responsible for an interface between at least any one of the second processor 520 and the sensor hub 530 and the first processor 510.

According to an embodiment, the first driver 514 may include various drivers for controlling a plurality of hardware components (at least any one of the memory controller (not illustrated), the first mailbox 551, and the display processor unit 560) included in the electronic device 501. For example, as illustrated in FIGS. 6A and 6B, the first driver 514 may include at least any one of the first DPU driver 5141, the LPD driver 5142, and a first inter-process communication (IPC) driver 5143.

According to an embodiment, the first DPU driver 5141 may be software for controlling the DPU 560. The first DPU driver 5141 may deliver image data of a frame buffer, which is delivered to display a screen from the platform 512, to the display 590. The first DPU driver 5141 may set driving timing for an interface with the DPU 560 and the display 590.

According to an embodiment, the LPD driver 5142 may be software for driving of the low power display mode. Upon the low power display mode, the LPD driver 5142 may manage data for low power display, which includes image data and meta data delivered through the application 511. In an embodiment, the LPD driver 5142 may control reset and power timing of at least any one of the second operating system 523 and the third operating system 533. The LPD driver 5142 may manage power of the memory, upon the low power display mode.

According to an embodiment, the first IPC driver 5143 may control the first mailbox 551 of the first processor 510. For another example, the first IPC driver 5143 may support data communication with each of the sensor hub 530 and the second processor 520. For example, the first IPC driver 5143 may deliver meta data for displaying a screen in the low power display mode set by the user to the second processor 520. The first IPC driver 5143 may deliver a list of sensor data for low power display mode and an update period to the sensor hub 530. The sensor data may be, for example, data capable of being measured by means of the sensor data 580 associated with activity information (e.g., exercise information and/or biometric information) of the user.

According to an embodiment, the sensor hub 530 may control at least one sensor included in the sensor module 580. The sensor hub 530 may collect sensor data detected by the at least one sensor and may control an operation of the at least one sensor. When the electronic device 501 is in the active mode, the sensor hub 530 may transmit sensor data obtained by means of the sensor module 580 to the first processor 510. When the electronic device 501 is in the low power display mode, the sensor hub 530 may transmit sensor data obtained by means of the sensor module 580 to the second processor 520.

According to an embodiment, the sensor hub 530 may be driven by control of at least any one of the first processor 510 and the second processor 520. Even when the first processor 510 is in the sleep state, the sensor hub 530 may be driven in the wake-up state. When the first processor 510 is in the sleep state, the sensor hub 530 may directly control the sensor module 580. According to an embodiment, the sensor hub 530 may execute the second software module 430 including a sensor service 531, a third operating system 533, and/or a sensor driver 5342.

According to an embodiment, the sensor service 531 may process a software algorithm for a sensor operation by means of sensor data detected by at least one sensor included in the sensor module 580. Upon the low power display mode, the sensor service 531 may receive a list of sensor data for low power display mode and an update period through a sensor driver (e.g., a third IPC driver of FIGS. 6A and 6B) 5342. The sensor service 531 may read and deliver sensor data obtained by the sensor module 580 to the sensor driver 5342 for each update period received from the sensor driver 5342. If necessary, the sensor service 531 may process and deliver the sensor data to the sensor driver 5324.

According to an embodiment, the third operating system 533 may be a lightweight operating system. For example, the third operating system 533 may be a real time operating system (RTOS) or a tiny operating system capable of being driven in low power. The third operating system 533 may be implemented with a processor of a lower specification than the first operating system 513 and a low-capacity memory. The third operating system 533 may provide a more limited service than the first operating system 513.

According to an embodiment, the third driver 534 may include various drivers for controlling a plurality of hardware components (at least any one of the third mailbox 553 and the sensor module 580) included in the electronic device 501. For example, the third driver 534 may include at least any one of a sensor driver 5342 and a third IPC driver 5341.

According to an embodiment, the sensor driver 5342 may be software for controlling the sensor module 580. According to an embodiment, the sensor driver 5342 may provide the sensor service 531 with activity information (e.g., exercise information and/or biometric information) of the user.

According to an embodiment, the third IPC driver 5341 may control the third mailbox 553. Furthermore, the third IPC driver 5341 may support data communication with each of the first processor 510 and the second processor 520. For example, the third IPC driver 5341 may receive the list of the sensor data for low power display mode and the update period from the first processor 510 and may deliver them the sensor service 531, and may deliver the sensor data processed by the sensor service 531 to the second processor 520.

According to an embodiment, the second processor 520 may be a processor driven when the electronic device 501 is in the low power display mode. The second processor 520 may operate independent of or together with the first processor 510. Additionally or alternatively, the second processor 520 may use lower power than the first processor 510 or may be specialized in a specified function. For example, at least a part of the second processor 520 may operate independently of the first processor 510 or may operate by being embedded in the first processor 510. For another example, the second processor 520 may be formed with the sensor hub 530 as one package. For another example, the second processor 520 may be omitted, and the data composer 521, the meta parser 522, the second operating system 523, and/or the second driver 524, which operate in the second processor 520, may operate in the sensor hub 530. The second processor 520 may be a micro controller unit (MCU) which is programmed to perform fewer functions than the first processor 510. Thus, the second processor 520 may be lower in operating clock than the first processor 510 and may have a short time taken to reach a peak current and a sleep current to reduce current consumption. According to an embodiment, the second processor 520 may include the data composer 521, the meta parser 522, the second operating system 523, and/or the second driver 524.

According to an embodiment, the second driver 524 may include various drivers for controlling a plurality of hardware components (at least any one of the second mailbox 552 and the display processor unit 560) included in the electronic device 501. For example, the second driver 524 may include at least any one of a second DPU driver 5241 and a second IPC driver 5243.

According to an embodiment, the second DPU driver 5241 may be software for controlling the DPU 560 upon the low power display mode. The second DPU driver 5241 may control the DPU 560 to deliver image data of a frame buffer, which is delivered from the data composer 521, to the display 590. Upon the low power display mode, the second DPU driver 5241 may set driving timing for an interface with the DPU 560 and the display 590. The second DPU driver 5241 may be, for example, a tiny driver capable of being driven in low power. Because a displayed screen is relatively simpler in the low power display mode than in the active mode, all resources of the second DPU driver 5241 may not be used in the low power display mode. Because the second DPU driver 5241 is able to provide a more limited function than the first DPU driver 5141 of the first processor 510, it may reduce current consumption. For example, the second DPU driver 5241 may limit overlay use of a plurality of layers and may limit (e.g., low resolution) a supported image format.

According to an embodiment, the second IPC driver 5243 may control the second mailbox 552. For another example, the second IPC driver 5243 may support data communication with each of the first processor 510 and the sensor hub 530. For example, the second IPC driver 5243 may receive an instruction to start/stop the low power display mode and meta data required upon the low power display mode from the first processor 510. The second IPC driver 5243 may receive sensor data from the sensor hub 530. The second IPC driver 5243 may perform a command of the received instruction and may deliver the meta data to the meta parser 522.

According to an embodiment, the meta parser 522 may receive the meta data from the first processor 510. The meta parser 522 may extract draw information necessary for the low power display mode from the received meta data. For example, the meta parser 522 may extract an image, a font, resolution, an image format, or an address stored in the memory from the meta data. For another example, the meta parser 522 may extract position information of the image to be displayed or position information of the font from the meta data. For another example, the meta parser 522 may extract a size and an address of each of a background buffer for background display and a canvas buffer for screen configuration.

According to an embodiment, the data composer 521 may store a screen for low power display mode based on the draw information corresponding to the meta data extracted from the meta parser 522. The screen for low power display mode may be generated by blending (or combining) the plurality of layers. For example, upon the low power display mode, a second layer including a watch image may be blended on a first layer including a background image.

According to an embodiment, the second operating system 523 may be a tiny operating system capable of being driven in low power. The second operating system 523 may be implemented with a processor of a lower specification than the first operating system 513 and a low-capacity memory. The second operating system 523 may provide a more limited service than the first operating system 513. According to an embodiment, the first operating system 523 and the third operating system 533 may be one tiny operating system. The tiny operating system may include a plurality of operating channels. The tiny operating system may include at least two operating channels allocated every second operating system 523 and third operating system 533. A resource associated with each of the second processor 520 and the sensor hub 530 may be controlled through an operating channel corresponding to each operating system.

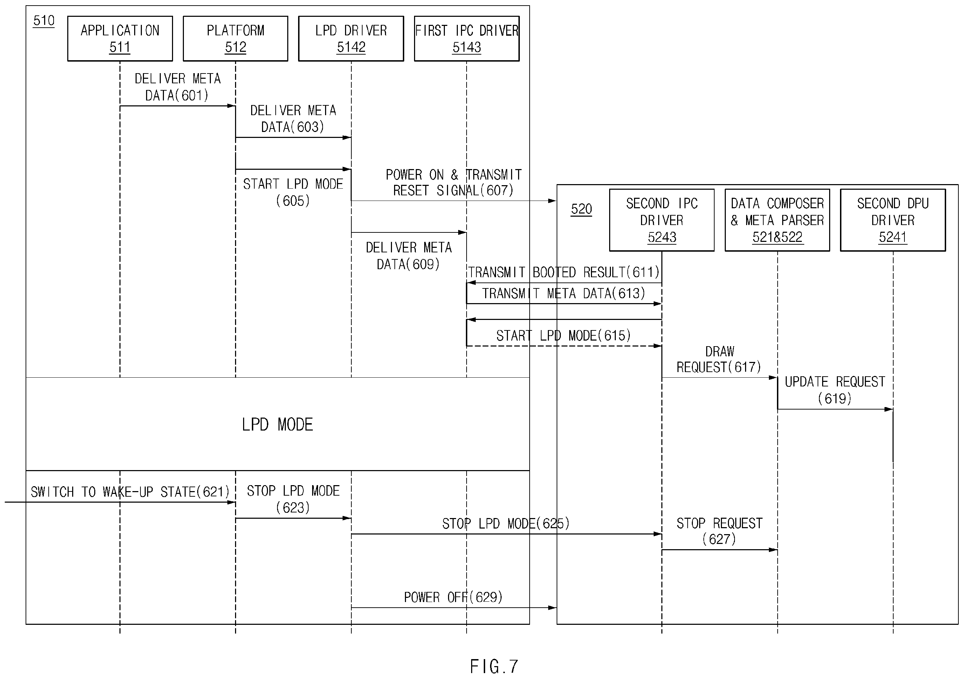

FIG. 7 is a flowchart for describing a process of starting and stopping a low power display mode according to various embodiments. The process of starting and stopping the low power display mode will be described in conjunction with FIG. 6A.

Referring to FIGS. 6A and 7, an electronic device 501 according to various embodiments may include a first processor 510 and a second processor 520. The first processor 510 may include an application 511, a platform 512, an LPD driver 5142, and a first IPC driver 5143. The second processor 520 may include a second IPC driver 5243, a meta parser 522 and a data composer 521, and/or a second DPU driver 5241.

In operation 601, the application 511 may deliver data for low power display, which includes meta data and image data, to the platform 512. The image data may be, for example, image data capable of being included in a screen when an application program associated with a low power display mode operates.

In operation 603, the platform 512 may process the meta data and the image data, which are delivered through the application 511, to be suitable for a hardware module and may deliver them to the LPD driver 5142.

In operation 605, when a certain event occurs while the electronic device 501 operates in an active mode, the electronic device 501 may switch to a low power display mode. At this time, the first processor 510 may switch from a wake-up state to a sleep state. When an event in which the electronic device 501 switches to the low power display mode occurs, the platform 512 may deliver a low power display mode start signal (LPD start) to the LPD driver 5142. The event in which the electronic device 501 switches to the low power display mode may be, but is not limited to, an example of satisfying a condition of a screen timeout or/and a request of a user (e.g., receiving a specific key input or decreasing battery power to a threshold or less). For example, when a screen timeout time set in the display 590 elapses from a final time of the user input to a display 590 of the electronic device 501, the first processor 510 may perform power saving for the first processor 510. The power saving for the first processor 510 may include a pause of an operating system included in the first processor 510 and a memory.

In operation 607, the LPD driver 5142 may control reset and power timing of a second operating system 523 included in the second processor 520 and may manage power of at least a portion of the memory for a low power display mode. For example, the LPD driver 5142 may supply power to a plurality of function blocks included in the second processor 520 in response to the low power display mode start signal and may transmit a reset signal.

In operation 609, the LPD driver 5142 may deliver the meta data and the image data processed by the platform 512 to the first IPC driver 5143.

In operation 611, when the power of the second processor 520 is supplied to be reset, the second IPC driver 5243 of the second processor 520 may transmit a booted result to the first IPC driver 5143.

In operation 613 and operation 615, the first IPC driver 5143 may transmit the low power display mode start signal (LPD start) together with the meta data to the second processor 520 depending on the booted result.

In operation 617, the second IPC driver 5243 may deliver a draw command together with the meta data to the meta parser 522 in response to the low power display mode start signal (LPD start). The draw command may be a command indicating whether to display a certain image on a screen upon the low power display mode.

In operation 619, the meta parser 522 may extract draw information necessary for the low power display mode from the received meta data. The data composer 521 may form a screen to be rendered upon the low power display mode based on the draw information corresponding to the meta data, which is extracted by the meta parser 522. The DPU driver 5241 may deliver the image data to the display 590, such that the screen formed by the data composer 521 is updated.

In operation 621, when a certain event occurs while the electronic device 501 is operating in the low power display mode, the electronic device 501 may switch to an active mode. At this time, the first processor 510 may switch from a sleep state to a wake-up state. The event in which the electronic device 501 switches to the active mode may be exemplified as, but not limited to, at least any one of a previously specified user input (e.g., a motion input, a key input, a voice input, or a touch input) or an alarm input.

In operation 623, the platform 512 may transmit a low power display mode stop signal to the LPD driver 5142 for the electronic device 501 to switch to the active mode. In an embodiment, when the first processor 510 switches to the wake-up state (or when the electronic device 501 switches to the active mode), the second processor 520 may be deactivated. For another example, when the first processor 510 switches to the wake-up state (or when the electronic device 501 switches to the active mode), the second processor 520 may not be deactivated.

In operation 625, the LPD driver 5142 may transmit the low power display mode stop signal to the second IPC driver 5243 of the second processor 520.

In operation 627, the second IPC driver 5243 may transmit the low power display mode stop request signal to the meta parser 522 and the data composer 521 in response to the low power display mode stop signal. As an example, because the meta parser 522 receives and processes various pieces of data including meta data from the first processor 510, it may receive the low power display mode stop request signal.

In operation 629, the LPD driver 5142 may perform power saving for the second processor 520, as a subsequent operation of the low power display mode stop signal. The power saving for the second processor 520 may include a pause of an operating system included in the second processor 520 and a memory.

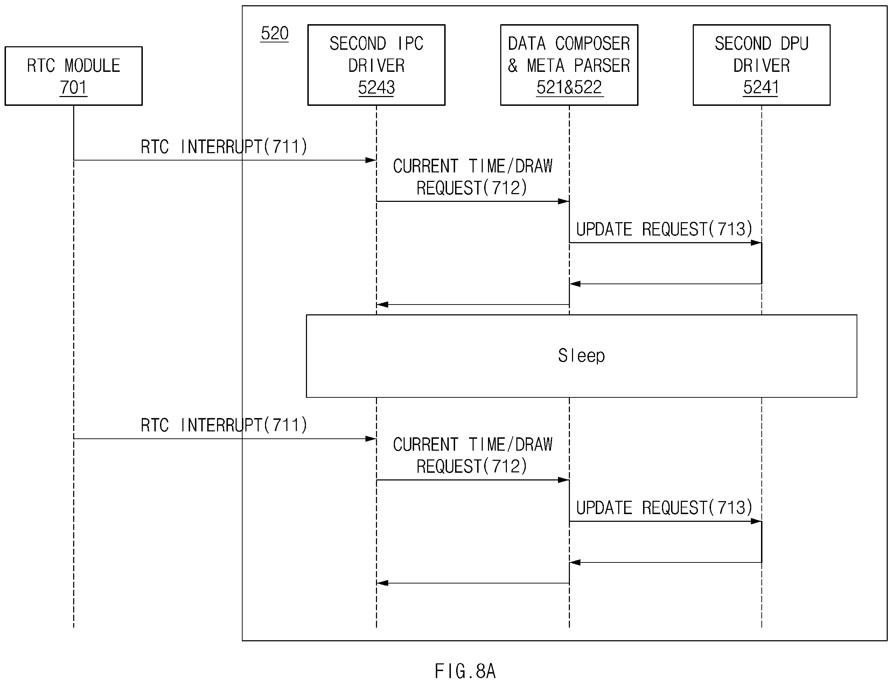

FIG. 8A is a drawing for describing a real-time update operation upon a low power display mode in an electronic device according to various embodiments.

Referring to FIG. 8A, in operation 711, a real time clock (RTC) module 701 may generate an interrupt signal for each set time (e.g., each second or each minute) upon a low power display mode. For example, because the minute hand of an analog watch rotates at a certain angle every minute (60 seconds), the RTC module 701 may generate an interrupt signal every 60 seconds such that the minute hand of the analog watch rotates at 6 degrees corresponding on 1 minute. For another example, because the hour hand of the analog watch rotates at a certain angle every 1 hour (60 minutes), the RTC module 701 may generate an interrupt signal every 60 minutes such that the hour hand of the analog watch rotates at 30 degrees corresponding on 1 hour. For another example, the RTC module 701 may deliver current time information and an interrupt signal to a second processor 520. In an embodiment, the RTC module 701 may operate independently of a sensor hub 530 or a first processor 510 and may operate by being embedded in the sensor hub 530 or the first processor 510.

In operation 712, a second IPC driver 5243 of the second processor 520 may deliver a draw command together with the current time information to a meta parser 522 in response to an RTC interrupt signal. The meta parser 522 may extract draw information by means of the current time information. The data composer 521 may form a watch image to be rendered upon the low power display mode based on the draw information extracted by the meta parser 522. The data composer 521 may provide an update request to a second DPU driver 5241, such that the watch image generated based on the current time information is updated on a screen.

In operation 713, the second DPU driver 5241 may deliver the watch image formed by the data composer 521 to a display 590, depending on the update request. The watch image may be periodically updated by means of the second processor 520 upon the low power display mode on the display 590.

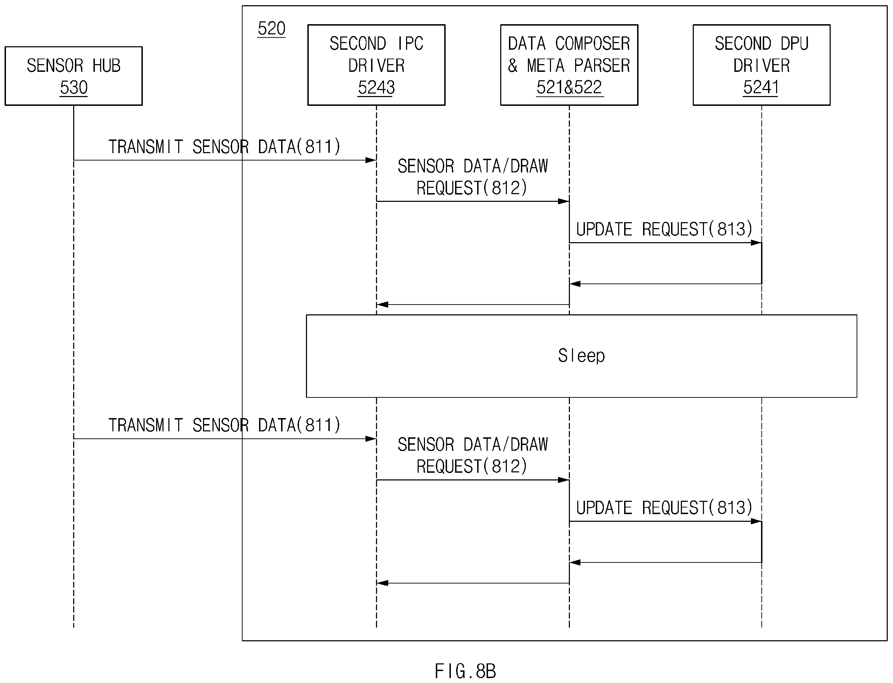

FIG. 8B is a drawing for describing an operation of updating sensor data upon a low power display mode in an electronic device according to various embodiments.

Referring to FIG. 8B, in operation 811, a sensor hub 530 may transmit sensor data sensed from a sensor module 580 to a second processor 520. For example, the sensor data may be data obtained by sensing user activity information associated with at least any one of biology and exercise.

The sensor hub 530 may generate an interrupt signal every set wake-up time (e.g., second or minute). The sensor hub 530 may periodically generate an interrupt signal such that activity information of a user is periodically updated.

In operation 812, a second IPC driver 5243 of the second processor 520 may deliver a draw command together with the sensor data to a meta parser 522 in response to the interrupt signal. The meta parser 522 may extract draw information by means of the sensor data. The data composer 521 may form a sensor image to be rendered upon a low power display mode based on the draw information extracted by the meta parser 522. The data composer 521 may provide an update request to a second DPU driver 5241, such that a sensor image generated based on current time information is updated on a screen.

In operation 813, the second DPU driver 5241 may deliver the sensor image formed by the data composer 521 to a display 590, depending on the update request. The sensor image may be periodically updated by means of the second processor 520 upon the low power display mode on the display 590. The sensor image may be an image corresponding to user activity information associated with at least any one of biology and exercise.

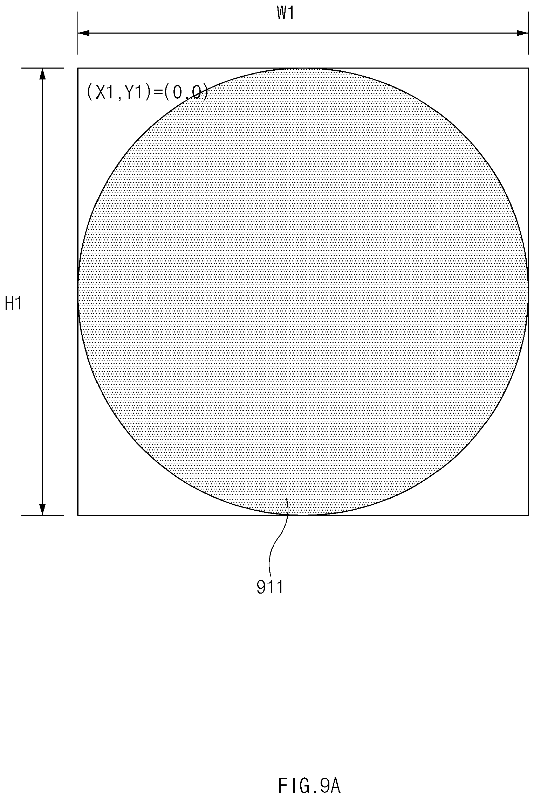

FIGS. 9A to 9E are drawings for describing a layer used to implement at least one piece of watch-related information and exercise-related information of an electronic device according to various embodiments.

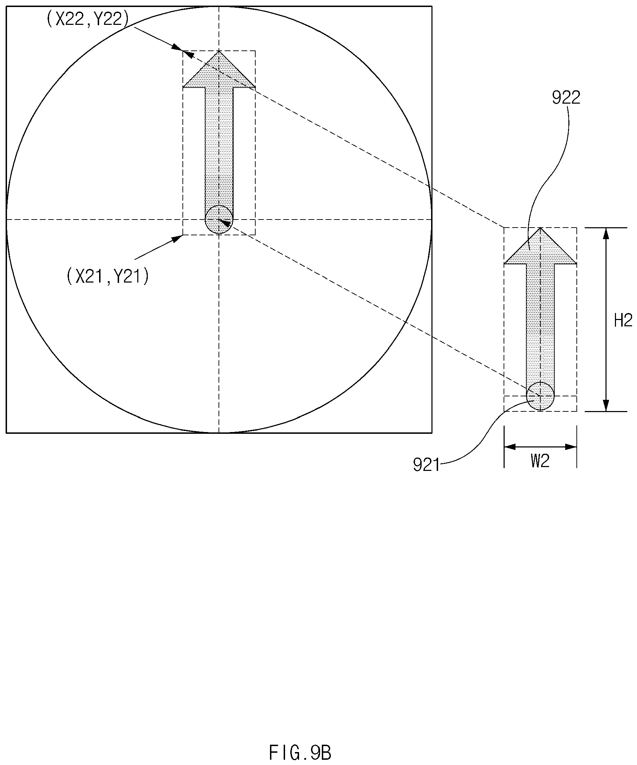

Referring to FIGS. 9A to 9E, an electronic device (e.g., an electronic device 501 of FIG. 5) may blend a plurality of layers upon a low power display mode to implement a screen. As illustrated in FIG. 9A, a first layer among the plurality of layers may include image information which is not frequently changed over time. For example, the first layer may include a background image object. The first layer may be kept in a memory in a first processor 510. As illustrated in FIGS. 9B to 9E, a second layer among the plurality of layers may include image information capable of being frequently changed over time. For example, the second layer may include at least any one of an hour image object, a minute image object, and a second image object. The second layer may be kept in a memory of at least any one of a second processor 520 and a sensor hub 530. The image information included in the second layer may be data of a relatively larger capacity than the image information included in the first layer.

According to an embodiment, the electronic device may blend the first layer which stores background image information with a third layer formed by rotating watch-related image information stored in the second layer depending on information about a time value. Thus, the electronic device may display content associated with current time information displayed in an analog form on the display. For another example, the electronic device may blend the first layer which stores background image information with a third layer which reads a value for number information capable of displaying a change in time, which is stored in the second layer. Thus, the electronic device may display content associated with current time information displayed in a digital form on the display. The electronic device may display content associated with user activity information including at least any one of biometric information and exercise information, together with the current time information displayed in the digital form or the analog form, on the display.

According to various embodiments, the electronic device may place each of the plurality of layers in a determined arrangement order. For example, the plurality of layers may be arranged such that the first layer (or a lower layer) including a background image is located at the bottom and the third layer (or an upper layer) is located at the top.

According to various embodiments, as illustrated in FIG. 9A, the first layer may implement a background image capable of being selected by a user. For example, the first layer may include a background image 911 capable of displaying watch-related information or user activity information. The background image may be formed by means of meta data including coordinate information (X1, Y1) and size information (H1, W1).

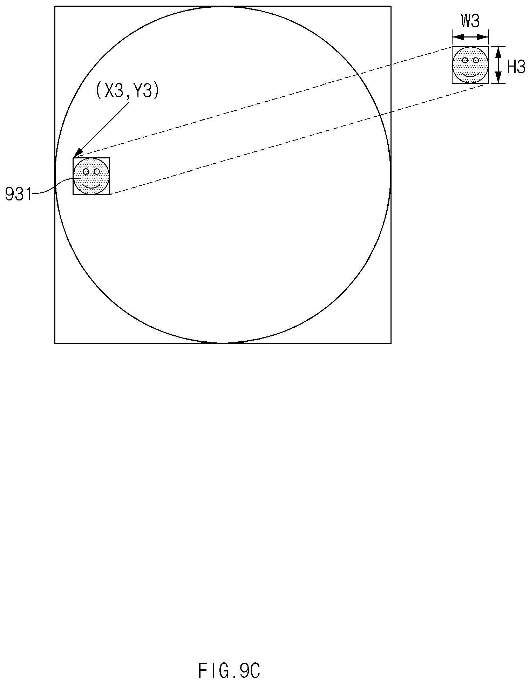

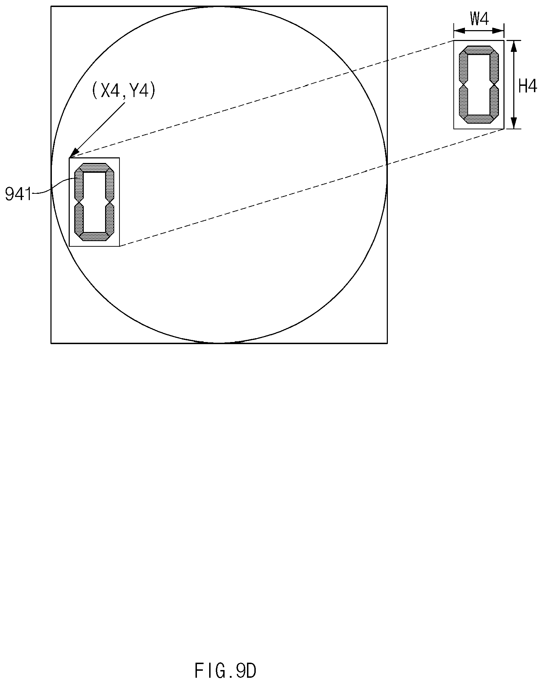

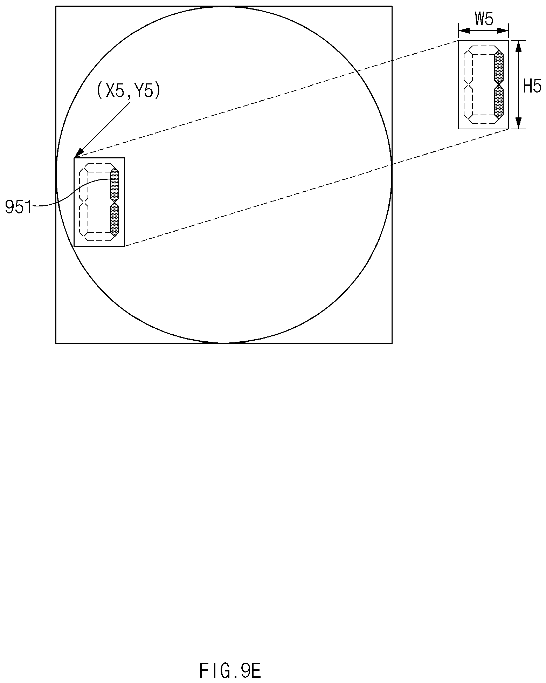

As illustrated in FIGS. 9B to 9E, the second layer may implement an image different from the first layer. For example, the second layer illustrated in FIG. 9B may implement analog watch information objects (or a clock hand) 921 and 922. The analog watch images 921 and 922 may include the image object 922 of at least any one of rotating hour, minute and second hands and the pivot image object 921 which is the center of rotation. The analog watch-related image objects 921 and 922 may be formed by means of meta data including position information ((X21, Y21), (X22, Y22)) and size information (Hb, Wb). For another example, the second layer illustrated in FIG. 9C may implement an additional information image object 931. The additional information image object 931 may be formed by means of meta data including coordinate information (X3, Y3) and size information (H3, W3). For another example, the second layer illustrated in FIGS. 9D and 9E may include number image objects 941 and 951 in a digital form, which implements time, biometric, and/or exercise information image(s). The number image objects 941 and 951 may be formed by means of meta data including coordinate information ((X4, Y4), (X5, Y5)) and size information (H4, H5, W4, H5).

According to various embodiments, the first processor 510 may store image data and meta data for being displayed in a low power display mode before starting the low power display mode. When an event for starting the low power display mode occurs, the first processor 510 may provide the second processor 520 with the stored meta data and image data.

For example, when the event for starting the low power display mode occurs, the first processor 510 may provide the second processor 520 with meta data (e.g., a position) together with a background image such as Table 1. The first processor 510 may provide an additional image together with a background image. The additional image may be an image, such as a background image, which is not changed until there is a separate command. For example, the additional image may be an image such as a date, weather, a temperature, or a user-specified phrase.

**[Table 1]**

| AOD Screen information | First processor | | Second processor |
|---|---|---|---|
| | Information 1 | Information 2 | |
| Background image | Image position | | Blend background image with additional images and deliver it to DPU every set time (e.g., 1 minute) |

For another example, when the event for starting the low power display mode occurs, the first processor 510 may provide the second processor 520 with meta data together with an analog watch image such as Table 2. The second processor 520 may modify (e.g., rotate or update) an image of at least any one of an hour hand, a minute hand, and a second hand based on current time information provided from an RTC module (e.g., an RTC module 701 of FIG. 8A), in the analog watch image provided from the first processor 510.

**[Table 2]**

| AOD Screen information | First processor | | Second processor |
|---|---|---|---|
| | Information 1 | Information 2 | |
| Time | Current time | | Rotate hour hand and minute hand depending on current time, when starting low power display mode |
| Hour hand | Position of hour hand image | rotation center coordinates | Rotate at angle of 0.5 degrees every 1 minute or update it in specific period (e.g., n times every 1 hour) |
| Minute hand | Position of minute hand image | rotation center coordinates | rotate at angle of 6 degrees every 1 minute |

For another example, when the event for starting the low power display mode occurs, the first processor 510 may provide the second processor 520 with meta data (e.g., a position and coordinates) together with a digital watch image such as Table 3. The second processor 520 may change (or update) a number image corresponding to an hour, a minute, and a second based on current time information provided from the RTC module (e.g., the RTC module 701 of FIG. 8A), in the digital watch image provided from the first processor 510.

**[Table 3]**

| AOD Screen information | First processor | | Second processor |
|---|---|---|---|
| | Information 1 | Information 2 | |
| Time | Position of font data | Tens digit of hour_coordinates 1 | Change 0 and 1 once every 10 hours |
| | | Ones digit of hour_coordinates 2 | Change them once every 1 hour in order of 0, 1, 2, 3, 4, 5, 6, 7, 8, 9, 0, 1, and 2 |
| | | Tens digit of minute_coordinates 3 | Change them once every 10 minutes in order of 0, 1, 2, 3, 4, and 5 |
| | | Ones digit of minute_coordinates 4 | Change them once every 1 minute in order of 0, 1, 2, 3, 4, 5, 6, 7, 8, and 9 |

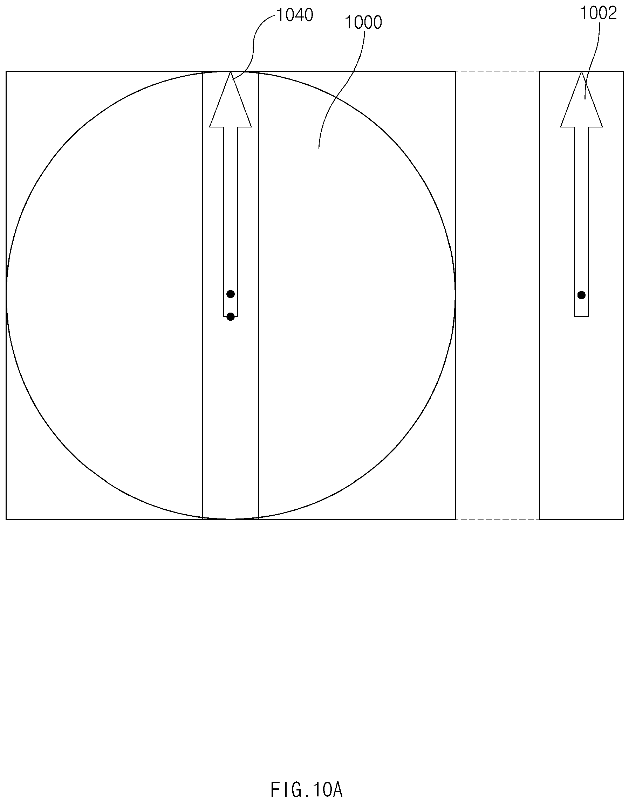

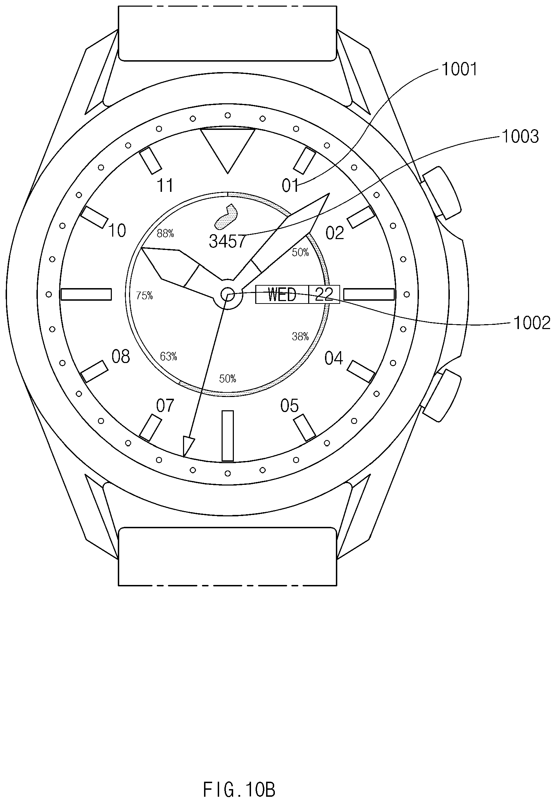

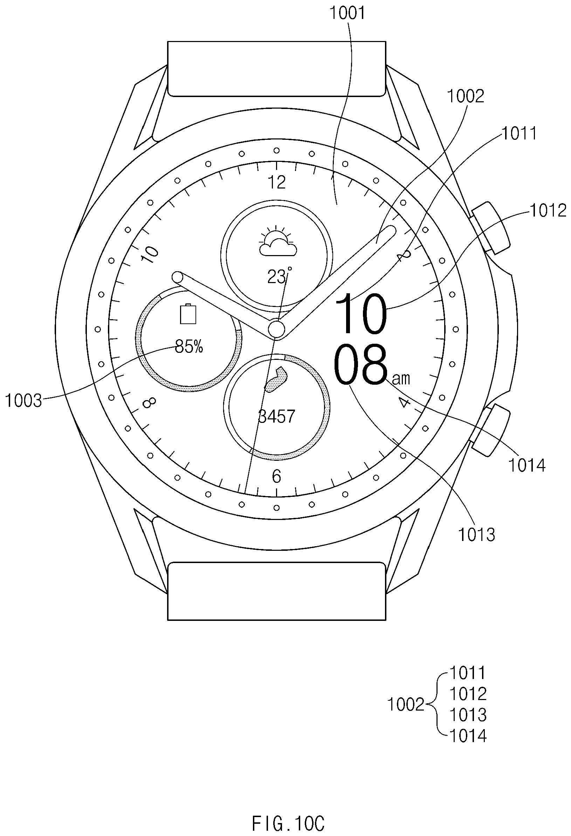

According to various embodiments, when the event for starting the low power display mode occurs, a sensor module (e.g., a sensor module 580 of FIG. 5) may provide the second processor 520 with meta data (e.g., a position and coordinates) together with sensor data. The second processor 520 may periodically change (or update) an exercise information image and a biometric information image generated by means of the sensor data from the sensor module. FIG. 10A is a drawing illustrating a background image included in a first layer of an electronic device and a visual object included in a second layer according to an embodiment. FIGS. 10B and 10C are drawings illustrating a screen on which an analog watch image is implemented in an electronic device according to an embodiment.

Referring to FIGS. 10A to 10C, an electronic device (e.g., an electronic device 501 of FIG. 5) may blend a plurality of objects together with a background image 1000 to display an analog watch image. For example, the plurality of objects may include a first visual object 1001 (or a first image object), a second visual object 1002 (or a second image object), and a third visual object 1003 (or a third image object). As illustrated in FIG. 10A, an area corresponding to the plurality of objects 1001, 1002, and 1003 in the background image 1000 may be formed as a blank (or a transparent area) 1040 such that the plurality of objects 1001, 1002, and 1003 are displayed on the background image 1000. The electronic device may be configured to display at least any one of the first visual object 1001, the second visual object 1002, and the third visual object 1003 on specified coordinates in a specified color or gradation.

According to various embodiments, the background image 1000 may include the at least one first visual object 1001 displayed at a substantially specified position in a fixed manner. The first visual object 1001 included in the background image 1000 may display a static element which maintains a certain form in an AOD environment regardless of a state of the electronic device. For example, when an analog watch is displayed on a screen of the display, the first visual object 1001 may include a reference graduation and/or a number constituting the analog watch. For another example, the first visual object 1001 may include a figure displaying weather and steps.

In an embodiment, the first visual object 1001 including the reference graduation, the number, and/or the figure may be displayed while minutely changing in position within a range difficult to be visually recognized by a user to reduce burn-in of a pixel. In this case, from the user's point of view, the first visual object 1001 may be recognized as being displayed at a fixed position.

According to various embodiments, the second visual object 1002 may be displayed to change according to a specified rule. The specified rule may include information about how the shape changes while each of the second hand, the minute hand, and the hour hand rotates at a specified angular velocity over time. For example, when the analog watch is displayed on the screen, the second visual object 1002 may indicate an hour hand, a minute hand, and a second hand of the analog watch as illustrated in FIGS. 10B and 10C. The minute hand may rotate depending on a specified rule (e.g., at an angle of 6 degrees every 1 minute), and the hour hand may rotate depending on a specified rule (e.g., an angle of 30 degrees every 1 hour).

For another example, the second visual object 1002 may repeatedly display a certain pattern or shape. When the digital watch is displayed on the screen as illustrated in FIG. 10C, the second visual object 1002 may include the tens digit 1011 indicating hours, the ones digit 1012 indicating hours, the tens digit 1013 indicating minutes, and the ones digit 1014 indicating minutes.

According to various embodiments, the third visual object 1003 may display activity information of the user, which is obtained by means of a sensor module 580. For example, as illustrated in FIG. 10B, the third visual object 1003 may indicate exercise information (e.g., steps) obtained using a momentum sensor. For another example, as illustrated in FIG. 10C, the third visual object 1003 may indicate remaining battery capacity information obtained using a battery level sensor.

According to an embodiment, the electronic device (an electronic device 101 of FIG. 1, an electronic device 300 of FIG. 3A, or an electronic device 501 of FIG. 5) may be configured to change a shape of the third visual object 1003, when there is a change in value indicating information depending on an event which occurs outside the electronic device or a state of the electronic device. For example, when an event in which weather information is changed or a message is received occurs, a second processor 520 may be configured to change the shape of the third visual object 1003.

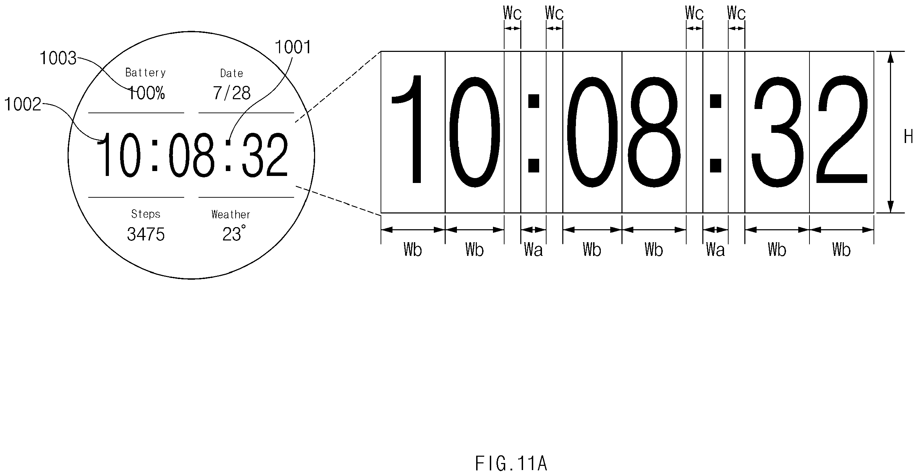

FIGS. 11A to 11C are drawings illustrating a screen on which a digital watch image is implemented in an electronic device according to an embodiment. In FIGS. 11A to 11C, the same or similar configurations to FIGS. 10A to 10C are assigned the same denotations, and the description thereof will be substituted by the description described in FIGS. 10A to 10C.

Referring to FIGS. 11A to 11C, an electronic device (e.g., an electronic device 501 of FIG. 5) may blend a plurality of objects together with a background image 1000 to display a digital-type clock. For example, the plurality of objects may include a first visual object 1001, a second visual object 1002, and a third visual object 1003. The electronic device may be configured to display at least any one of the first visual object 1001, the second visual object 1002, and the third visual object 1003 on specified coordinates at a specified size and in a specified color or gradation. For example, the electronic device may be configured to display the first visual object 1001 with a first width Wa and height, display the second visual object 1002 with a second width Wb and height, and display the first visual object 1001 and the second visual object 1002 to be spaced apart from each other across a third width Wc.

According to embodiment, the background image 1000 may include the at least one first visual object 1001 displayed at a substantially specified position in a fixed manner. For example, when a digital watch is displayed on a screen, the first visual object 1001 may include a dividing line surrounding a number indicating a time. For another example, the first visual object 1001 may include characters for displaying a battery, a date, steps, or weather, a unit (%) of remaining battery capacity, and/or a unit (°) of temperature. For another example, the first visual object 1001 may include a colon (:) which divides an hour, a minute, and a second of a current time in a number indicating a time.

According embodiment embodiments, the second visual object 1002 may be displayed to change in shape depending on a specified rule. The second visual object 1002 may repeatedly display a certain pattern or shape. When the digital watch is displayed on the screen, the second visual object 1002 may include the tens digit 1011 indicating hours, the ones digit 1012 indicating hours, the tens digit 1013 indicating minutes, and the ones digit 1014 indicating minutes.

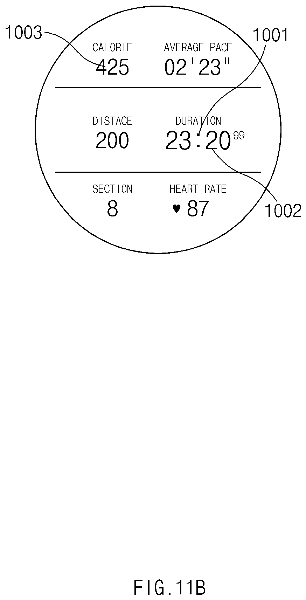

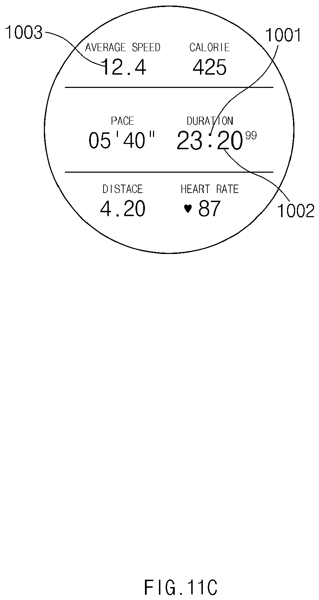

According to embodiment, the third visual object 1003 may display biometric sensor information obtained by means of a sensor module. For example, as illustrated in FIG. 11A, the third visual object 1003 may indicate remaining battery capacity information obtained using a battery level sensor included in the sensor module. For another example, as illustrated in FIGS. 11B and 11C, the third visual object 1003 may indicate biometric sensor information (e.g., a heart rate) obtained using a biometric sensor.

According to an embodiment, the electronic device (an electronic device 101 of FIG. 1, an electronic device 300 of FIG. 3A, or an electronic device 501 of FIG. 5) may be configured to change a shape of the third visual object 1003, when there is a change in value indicating information depending on an event which occurs outside the electronic device or a state of the electronic device. For example, as illustrated in FIGS. 11A to 11C, the third visual object 1003 may include steps of a user, which increase by 1 in response to event information called one step of the user. For another example, the third visual object 1003 may include a calorie, an average speed, an average pace, a distance, or a section, which changes in response to event information of the momentum of the user.

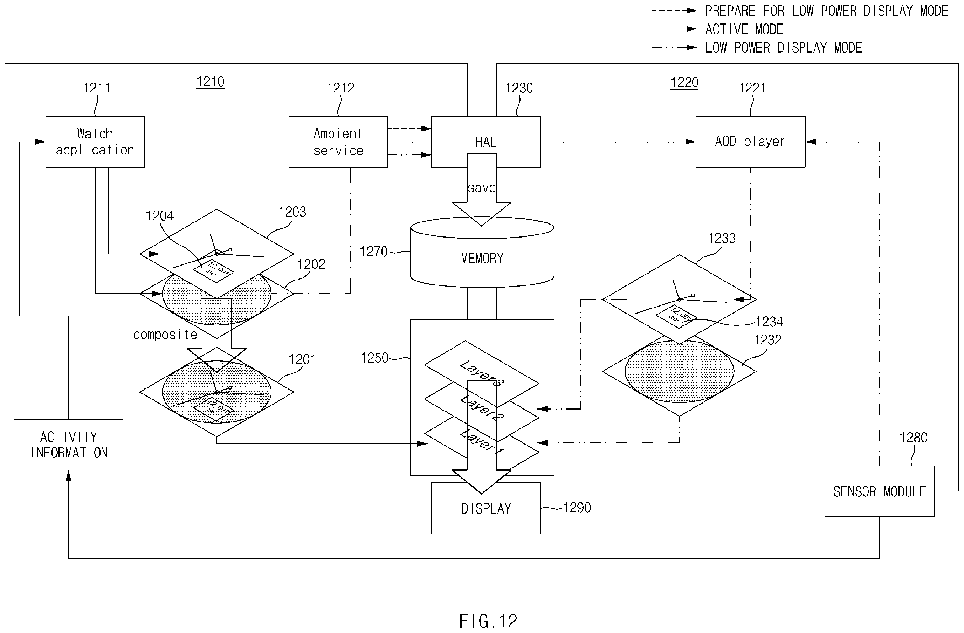

FIG. 12 illustrates flow of processing an image displayed in an active mode (or a first mode) and a low power display mode (or a second mode), according to an embodiment of the disclosure.

According to an embodiment, a first processor 1210 (e.g., a first processor 510 of FIG. 5) may be configured to display a first image 1201 including a background image 1202, a watch image 1203, or a user activity information image 1204 formed using a watch application 1211 in an active mode on a display 1290 (e.g., a display 590 of FIG. 5). For example, the watch image 1203 may be generated by blending at least any one of an hour hand, a minute hand, and a second hand constituting time information.

According to an embodiment, the watch application 1211 may receive activity information corresponding to sensor data (e.g., a heart rate, blood sugar information, body temperature information, blood pressure information, or exercise information (e.g., steps)) sensed by means of a sensor module 1280 (e.g., a sensor module 580 of FIG. 5) when the electronic device is in an active mode and may form the first image 1201 together with the watch image 1203 using the user activity information image 1204 generated based on the received activity information. The user activity information image 1204 may include, for example, a figure and a number.

According to an embodiment, an ambient service (or an AOD service) 1212 may deliver at least a portion of a watch image to be displayed in a low power display mode to a hardware abstraction layer (HAL) 1230 to always display pieces of information required even in the low power display mode. The ambient service 1212 may generate at least a portion of the watch image to be displayed in the low power display mode using at least a portion of a watch image displayed in the active mode. When an event for switching to the low power mode is detected, the generated watch image may be delivered to the HAL 1230.

According to an embodiment, the HAL 1230 may provide a memory 1270 with at least a portion of the watch application 1211 associated with the ambient service 1212 in an execution screen generated by a watch application and may trigger an AOD player 1221. For example, the HAL 1230 may include at least any one of a meta parser (e.g., a meta parser 522 of FIG. 5) and a data composer (e.g., a data composer 521 of FIG. 5).

According to an embodiment, the AOD player 1221 may generate a watch image to be displayed with an AOD function upon the low power display mode using the watch image from the first processor 1210, which is delivered through the HAL 1230. The AOD player 1221 may receive sensor data sensed by means of the sensor module 1280 periodically or if necessary when the electronic device is in the low power display mode and may generate a user activity information image 1204 based on the received sensor data.

According to an embodiment, a display processor unit 1250 (e.g., a display processor unit 560 of FIG. 5) may blend a layer including a background image 1232 of a watch provided from the first processor 1210 upon the low power display mode with a layer including an image 1233 of at least any one of hour information, minute information, and second information changed in the second processor 1220 to display it on the display 1290. The display processor unit 1250 may blend the background image 1232, the watch image 1233 including an hour/minute/second hand image, and the user activity information image 1234 to generate a second image. The background image provided from the first processor 1210 may be kept constant over time. The second processor 1220 may update and display an image associated with hour information, an image associated with minute information, and an image associated with second information over time. According to another embodiment, the second processor 1220 may receive the background image, the image associated with the hour information, and the image associated with the minute information depending on a certain period (e.g., 1 minute) from the first processor 1210 and may blend and display the received image and an image associated with second information selected by the second processor 1220.

According to an embodiment, the second processor 1220 may calculate the passage of time based on a current time. For example, when the electronic device switches from the active mode to the low power display mode, the second processor 1220 may align the watch image (e.g., hour, minute, and second images) with the passage of time to display the second image on the display 1290. For example, the second processor 1220 may receive and store one hour hand image, one minute hand image, and one second hand image indicating a specific time from the first processor 1210. The second processor 1220 may modify (e.g., rotate) and display an hour hand image, a minute hand image, and a second hand image received from the first processor 1210 on the display 1290 based on current time information received from an RTC module (e.g., an RTC module 701 of FIG. 8A).

According to an embodiment, the second processor 1220 (e.g., a second processor 520 of FIG. 5) may be configured to display the second image generated by blending at least any one of time information and activity information with a third image in the low power display mode on the display 1290. The time information may be received through a watch module (e.g., the RTC module 701 of FIG. 8A), and the activity information may be received through a sensor module (e.g., the sensor module 580 of FIG. 5). The third image may be an image associated with the second image in the first image (or the background image) received from the first processor 1210. For example, the third image may include position information in which the watch image including time information in the first image received from the first processor 1210 will be displayed and position information in which sensor data will be displayed.

Table 4 is to describe current consumption of electronic devices according to a comparison example and an embodiment.

**[Table 4]**

| Classification | | Time | Average current | |
|---|---|---|---|---|
| | Processor (wake-up) | 1.80 s | 31.07 mA | |
| Comparison example | Processor (sleep) | | 58.20 s | 6.40 mA |
| | Total | | 60.00 s | 7.14 mA |
| Embodiment | First processor (sleep) | Second processor (wake-up) | 0.02 s | 30.67 mA |
| | | Second processor (sleep) | 59.98 s | 6.55 mA |
| | Total | | 60.00 s | 6.56 mA |
| Improved current | | | | 0.58 mA |

When the watch image is displayed on the electronic devices according to the comparison example and the embodiment, a minute hand image object included in the watch image may move once per minute. Thus, the watch image may be updated once per minute. When the watch image is updated, because the processor should switch from a sleep state to a wake-up state like Table 4 in the comparison example, it may take about 1.80 seconds and the average current can be consumed by 31.07 mA. On the other hand, in the embodiment, when a first processor (e.g., a first processor 1210 of FIG. 12) which is a main processor is in a sleep state, a second processor (e.g., a second processor 1220 of FIG. 12) which is a sub-processor may switch to the wake-up state. In the embodiment, it may take about 0.02 seconds which are shorter than that in the comparison example and the average current may be consumed by 30.67 mA. As such, the embodiment may less reduce current consumption of about 0.58 mA than the comparison example.

When the electronic device according to the embodiment displays the watch image, the watch image may be updated during a portion of 1 minute and the watch image may be maintained without being updated during the rest of 1 minute. In the duration when the watch image is maintained, the first processor (e.g., the first processor 1210 of FIG. 12) and the second processor (e.g., the second processor 1220 of FIG. 12) may maintain the sleep state without being woken up. Because the first processor and the second processor maintain the sleep state, image data corresponding to the watch image stored in a memory may be transmitted to a display (e.g., a display 1290 of FIG. 12) through a display processor unit (e.g., a display processor unit 1250 of FIG. 12).

An electronic device according to various embodiments may include a display, at least one sensor module, a time module configured to receive time information, a first processor 510 configured to generate and output a first image in a first mode, a second processor 520 configured to generate and output a second image in a second mode running at lower power than the first mode, and a sensor hub 530 configured to transmit sensor data obtained by means of the sensor module in the second mode to at least any one of the first processor and the second processor. The second processor 520 may be configured to receive a third image associated with the second image through the first processor, in the second mode in which the first processor is in a sleep state, blend at least any one of the sensor data received from the sensor module and the time information received through the time information with the third image to generate the second image, and display the second image on the display.

According to various embodiments, the third image may be associated with at least a portion of the first image received from the first processor.

According to various embodiments, the second processor may be configured to select and display at least any one of a plurality of image objects corresponding to the time information on the display, upon the second mode. The plurality of image objects may include at least any one of a plurality of hour image objects, a plurality of minute image objects, and a plurality of second image objects.

According to various embodiments, the second processor may be configured to select and update any one of the plurality of minute image objects to the display every first period, in the second mode, and select and update any one of the plurality of hour image objects to the display every second period different from the first period.

According to various embodiments, the at least one sensor module may sense at least any one of exercise information and biometric information of a user of the electronic device. The second processor may be configured to blend and display a sensor image generated based on the sensed information of the user, the time information, and a background image corresponding to the third image on the display in the second mode.

According to various embodiments, the second processor may be configured to select and update a sensor image corresponding to the exercise information and the biometric information of the user to the display every specified period, in the second mode.

According to various embodiments, the second processor may be configured to blend and display at least any one of the sensor data and the time information on a background image corresponding to the third image on the display.

According to various embodiments, the second processor may include a meta parser configured to extract draw information for displaying the second image from pieces of meta data delivered from at least any one of the first processor and the sensor module and a data composer configured to generate the second image based on the extracted draw information. The meta data may include a watch position at which the time information will be displayed, a position of the sensor data, and the third image associated with the first image.

According to various embodiments, the sensor hub may include a sensor service configured to process the sensor data received from the sensor module and an inter-process communication (IPC) driver configured to deliver the sensor data processed from the sensor service to the second processor.

According to various embodiments, the first mode may be an active mode, and the second mode may be a low power display mode.

An electronic device according to various embodiments may include a display, at least one sensor module configured to sense activity information of a user who uses the electronic device, a first processor configured to generate and output a first image in a first mode, a second processor configured to generate and output a second image in a second mode running at lower power than the first mode, and a sensor hub configured to transmit sensor data obtained by means of the sensor module to the first processor in the first mode and transmit the sensor data to at least any one of the first processor and the second processor in the second mode. The second processor may be configured to receive a third image associated with the second image through the first processor, in the second mode in which the first processor is in a sleep state, blend the received third image with the sensor data received from the sensor module to generate the second image, and display the second image on the display.

According to various embodiments, the electronic device may further include a time module configured to receive time information. The at least one sensor module may sense at least any one of exercise information and biometric information of the user of the electronic device. The second processor may be configured to update at least any one of the sensor data generated based on the sensed information of the user and the time information every certain period, in the second mode, and blend and display the updated image and the third image on the display.

According to various embodiments, the second processor may include a meta parser configured to extract draw information for displaying the second image from pieces of meta data delivered from at least any one of the first processor and the sensor module and a data composer configured to blend at least any one of the sensor image and the watch image on the background image based on the extracted draw information to generate the second image. The meta data may include a watch position at which the time information will be displayed, a position of the sensor data, and the third image associated with the first image.

According to various embodiments, the sensor hub may include a sensor service configured to process the sensor data received from the sensor module and an inter-process communication (IPC) driver configured to deliver the sensor data processed from the sensor service to the second processor.

According to various embodiments, the first mode may be an active mode, and the second mode may be a low power display mode.

An operation method of an electronic device according to various embodiments may include generating and outputting, by a first processor, a first image in a first mode, generating and outputting, by a second processor, a second image, in a second mode running at lower power than the first mode, receiving, by a time module, time information, sensing, by at least one sensor module, activity information of a user who uses the electronic device, in the first mode and the second mode, and transmitting, by a sensor hub, the activity information of the user, the activity information being sensed in the first mode, to the first processor and transmitting, by the sensor hub, the activity information of the user, the activity information being sensed in the second mode, to the second processor. The second processor may be configured to receive a third image associated with the second image through the first processor, in the second mode in which the first processor is in a sleep state, blend at least any one of sensor data received from the sensor module and the time information received through the time module with the third image to generate the second image, and display the second image on a display.

According to various embodiments, the at least one sensor module may sense at least any one of exercise information and biometric information of the user of the electronic device. The second processor may be configured to blend and display the sensor data generated based on the sensed information of the user, the watch information, and the third image on the display, in the second mode.

According to various embodiments, the generating and outputting of the second image in the second mode may include selecting and updating a sensor image corresponding to at least any one of exercise information and biometric information of the user to the display every certain period.

According to various embodiments, the generating and outputting of the second image in the second image may include extracting draw information for displaying the second image from pieces of meta data delivered from at least any one of the first processor and the sensor module and blending at least any one of the sensor data and the time information on the third image based on the extracted draw information to generate the second image. The meta data may include a watch position at which the time information will be displayed, a position of the sensor data, and the third image associated with the first image.

According to various embodiments, the first mode may be an active mode, and the second mode may be a low power display mode.

It should be appreciated that various embodiments of the disclosure and the terms used therein are not intended to limit the technological features set forth herein to particular embodiments and include various changes, equivalents, and/or replacements for a corresponding embodiment. With regard to the description of the drawings, similar reference numerals may be used to refer to similar elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

According to the situation, the expression "adapted to or configured to" used in this disclosure may be used interchangeably with, for example, the expression "suitable for", "having the capacity to", "adapted to", "made to", "capable of", or "designed to" in hardware or software. The expression "a device configured to" may mean that the device is "capable of' operating together with another device or other components. For example, a "processor set to (or configured to) perform A, B, and C" may mean a dedicated processor (e.g., an embedded processor) for performing corresponding operations or a generic-purpose processor (e.g., a CPU or an AP) that performs corresponding operations by executing one or more programs stored in a memory device (e.g., memory).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. The "module" may be implemented mechanically or electronically and may include, for example, an application-specific integrated circuit (ASIC) chip, field-programmable gate arrays (FPGAs), or a programmable-logic device for performing some operations, which are known or will be developed.

At least a part of an apparatus (e.g., modules or functions thereof) or a method (e.g., operations) according to various embodiments may be implemented by instructions stored in computer-readable storage media (e.g., memory) in the form of a program module. The instructions, when executed by a processor (e.g., a processor), may cause the processor to perform functions corresponding to the instructions. The computer-readable storage media may include a hard disk, a floppy disk, a magnetic media (e.g., a magnetic tape), an optical media (e.g., CD-ROM, DVD, magneto-optical media (e.g., a floptical disk)), an embedded memory, and the like. The instructions may include a code made by a compiler or a code executable by an interpreter.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a display;
at least one sensor module;
a time module configured to receive time information;
a first processor configured to generate and output a first image in a first mode;
a second processor configured to generate and output a second image in a second mode running at lower power than the first mode; and
a sensor hub configured to transmit sensor data obtained by means of the sensor module in the second mode to at least any one of the first processor and the second processor,
wherein the second processor is configured to:
receive a third image associated with the second image through the first processor, in the second mode in which the first processor is in a sleep state, and blend at least any one of the sensor data received from the sensor module and the time information received through the time module with the third image to generate the second image; and
display the second image on the display.

2. The electronic device of claim 1, wherein the third image is associated with at least a portion of the first image received from the first processor.

3. The electronic device of claim 2, wherein the second processor is configured to select and display at least any one of a plurality of image objects corresponding to the time information on the display, upon the second mode, and
wherein the plurality of image objects include at least any one of a plurality of hour image objects, a plurality of minute image objects, and a plurality of second image objects.

4. The electronic device of claim 3, wherein the second processor is configured to:
select and update any one of the plurality of minute image objects to the display every first period, in the second mode, and select and update any one of the plurality of hour image objects to the display every second period different from the first period.

5. The electronic device of claim 1, wherein the at least one sensor module senses at least any one of exercise information and biometric information of a user of the electronic device, and
wherein the second processor is configured to blend and display a sensor image generated based on the sensed information of the user, the time information, and a background image corresponding to the third image on the display in the second mode.

6. The electronic device of claim 5, wherein the second processor is configured to:
select and update a sensor image corresponding to the exercise information and the biometric information of the user to the display every specified period, in the second mode.

7. The electronic device of claim 1, wherein the second processor is configured to blend and display at least any one of the sensor data and the time information on a background image corresponding to the third image on the display.

8. The electronic device of claim 7, wherein the second processor includes:
a meta parser configured to extract draw information for displaying the second image from pieces of meta data delivered from at least any one of the first processor and the sensor module; and
a data composer configured to generate the second image based on the extracted draw information, and
wherein the meta data includes a watch position at which the time information will be displayed, a position of the sensor data, and the third image associated with the first image.

9. The electronic device of claim 1, wherein the sensor hub includes:
a sensor service configured to process the sensor data received from the sensor module; and
an inter-process communication (IPC) driver configured to deliver the sensor data processed from the sensor service to the second processor.

10. The electronic device of claim 1, wherein the first mode is an active mode, and the second mode is a low power display mode.

11. An electronic device, comprising:
a display;
at least one sensor module configured to sense activity information of a user who uses the electronic device;
a first processor configured to generate and output a first image in a first mode;
a second processor configured to generate and output a second image in a second mode running at lower power than the first mode; and
a sensor hub configured to transmit sensor data obtained by means of the sensor module to the first processor in the first mode and transmit the sensor data to at least any one of the first processor and the second processor in the second mode,
wherein the second processor is configured to:
receive a third image associated with the second image through the first processor, in the second mode in which the first processor is in a sleep state, and blend the received third image with the sensor data received from the sensor module to generate the second image; and
display the second image on the display.

12. The electronic device of claim 11, further comprising:
a time module configured to receive time information,
wherein the at least one sensor module senses at least any one of exercise information and biometric information of the user of the electronic device, and
wherein the second processor is configured to: upon the second mode,
update at least any one of the sensor data generated based on the sensed information of the user and the time information every certain period; and
blend and display the updated image and the third image on the display.

13. The electronic device of claim 12, wherein the second processor includes:
a meta parser configured to extract draw information for displaying the second image from pieces of meta data delivered from at least any one of the first processor and the sensor module; and
a data composer configured to blend at least any one of a sensor image and a watch image on a background image based on the extracted draw information to generate the second image, and
wherein the meta data includes a watch position at which the time information will be displayed, a position of the sensor data, and the third image associated with the first image.

14. The electronic device of claim 11, wherein the sensor hub includes:
a sensor service configured to process the sensor data received from the sensor module; and
an inter-process communication (IPC) driver configured to deliver the sensor data processed from the sensor service to the second processor.

15. The electronic device of claim 11, wherein the first mode is an active mode, and the second mode is a low power display mode.
